# EUROPÄISCHE PATENTSCHRIFT

(11) **EP 3 782 936 B1**
(45) Veröffentlichungstag und Bekanntmachung des Hinweises auf die Patenterteilung: **06.12.2023**
(21) Anmeldenummer: 20190750.8
(22) Anmeldetag: 12.08.2020
(51) Int. Cl.: B65G 9/00, B65G 17/48

(54) **TRANSPORTTASCHE FÜR EIN HÄNGEFÖRDERSYSTEM**
TRANSPORT BAG FOR OVERHEAD CONVEYOR SYSTEM
SAC DE TRANSPORT POUR UN SYSTÈME DE TRANSPORT SUSPENDU

(30) Priorität: 22.08.2019 CH 10522019
(43) Veröffentlichungstag der Anmeldung: 24.02.2021
(60) Teilanmeldung: 23206121.8
(73) Patentinhaber: FERAG AG, 8340 Hinwil (CH)
(72) Erfinder: Fenile, Roberto, 8623 Wetzikon (CH); Ruge, Martin, 4656 Starrkirch-Wil (CH)
(74) Vertreter: IPrime Rentsch Kaelin AG

(56) Entgegenhaltungen:
- EP-A2- 3 090 967
- CH-A1- 713 082
- US-A- 2 535 625

## Beschreibung

### Technisches Gebiet

Die Erfindung betrifft Transporttaschen für Hängefördersysteme.

### Technologischer Hintergrund

In automatisierten Warenlagern, weitläufigen Produktionsstätten und ganz allgemein bei der Förderung und dem Transport von Waren haben sich Hängefördersysteme als ein effizientes Mittel für den Transport, die Zwischenpufferung, aber auch die langfristige Lagerung verschiedener Arten von Waren erwiesen. Bei Hängefördersystemen werden die Waren entweder auf geeignete Weise direkt an einzelnen Förderelementen eines Fördersystems aufgehängt, oder in entsprechende Transportelemente wie beispielsweise Transporttaschen eingebracht, die wiederum hängend an den Förderelementen gelagert sind.

Hängefördersysteme können als Transportkettenanlagen realisiert sein, bei welchen eine Vielzahl von Förderelementen Glieder einer Kette bilden. die entlang eines Förderpfads bewegt wird. Ebenfalls bekannt sind schwerkraftgeförderte Fördersysteme, bei welchen sich einzelne Förderelemente auf entsprechenden Laufschienen bewegen. Solche schwerkraftgeförderte, schienengeführte Fördersysteme ist beispielsweise aus US 2017/275826 A1, US 2018/215547 A1 und US 2017/282317 A1 bekannt.

Insbesondere die stetig zunehmenden Volumina im Online-Handel erfordern bei Händlern, Zulieferern und Logistikunternehmen einen effizienten Umgang mit den zu verarbeitenden Waren, insbesondere in Bezug auf die Herstellung, Bereitstellung und Lagerung der Artikel, sowie die Kommissionierung und den Transport der Artikel zum Kunden. Hängefördersysteme mit Transportelementen sind besonders geeignet für die effiziente Förderung von heterogenen Waren-Einheiten, wie beispielsweise Werkstücken in Produktionsprozessen, Ersatzteilen, Konsumgütern wie Büchern, Kleidern, Schuhen, etc. So können beispielsweise in Logistikzentren von Versandhandelsfirmen Hängefördersysteme verwendet werden, um eine Vielzahl von Waren-Einheiten verschiedener Grösse und Gewicht einzulagern, und Gruppen von Artikeln gemäss den jeweiligen Kundenaufträgen zu kommissionieren, also gemäss Vorgaben zu Warengruppen zusammenzustellen, und für den Versand bereitzustellen.

WO 2018/162123 A1 zeigt ein beispielhaftes Verfahren zum Kommissionieren von Waren-Einheiten in einem Hängefördersystem, bei welchem die einzelnen Waren aus einer Warensammlung ausgelagert und zu Warengruppen kommissioniert werden und in Form dieser Warengruppen zur weiteren Verarbeitung bereitgestellt werden. Die Zusammenstellung der Warengruppen erfolgt dadurch, dass die entsprechenden Waren-Einheiten in eine Hängefördertasche eine Hängefördersystems eingebracht werden.

Ein für ein Hängefördersystem relevanter Aspekt ist das einfache, reibungslose und effiziente Einbringen von Waren-Einheiten in die leeren Transportelemente, beispielsweise Transporttaschen, und das einfache, reibungslose und effiziente Entnehmen der Waren-Einheiten aus den Transportelementen. Ein manuelles Einbringen der Waren-Einheiten in die Transportelemente bzw. Entnehmen der Waren-Einheiten aus den Transportelementen erlaubt dabei eine flexible Handhabung verschiedener Waren-Einheiten, ist jedoch langsam und kostenintensiv. Entsprechend wurden teilautomatisierte oder vollautomatisierte Systeme entwickelt.

EP 2130968 A1 zeigt eine Beladestation für in einer Hängeförderanlage transportierte Transporttaschen. Die Transporttaschen weisen in Förderrichtung eine versteifte Wand mit einem Aufhängehaken an einem oberen Ende auf, welcher an einem Laufwagen aufgehängt ist. Die Wand ist quer zur Förderrichtung ausgerichtet. Eine Stoffbahn ist an einem am oberen Ende der Wand angebrachten schwenkbaren Rahmenbügel und am unteren Ende der Wand angebracht, so dass ein seitlich offener Beutel gebildet wird. Die Transporttaschen werden kontinuierlich entlang dem Förderpfad waagrecht gefördert. Über eine Kulissenführung wird der im leeren Zustand der Transporttasche senkrecht hängende Rahmenbügel in eine waagrechte Position nach oben gedrückt. Die seitliche Taschenöffnungen werden dadurch geöffnet. Die Waren-Einheiten können nun durch die seitlichen Öffnungen in den Beutel der Transporttasche eingebracht werden. Eine Befüllung von oben her ist nicht möglich, da die obere Öffnung der Transporttasche wegen der Laufschiene des Fördersystems nicht zugänglich ist.

US 2018/072511 A1 zeigt eine Vorrichtung zum Öffnen einer in einer Hängeförderanlage transportierbaren Transporttasche. Der Laufwagen mit der daran hängenden Transporttasche wird an einem vorbestimmten Punkt der Laufschiene zum Öffnen der Transporttasche in seiner Vorwärtsbewegung angehalten. Die Transporttasche wird zum Beladen und/oder Entladen geöffnet, indem ein Aktuator den Rahmenbügel nach oben schwenkt, so dass die seitlichen Taschenöffnungen geöffnet werden und so der Beutel der Transporttasche zugänglich wird.

US 2018/0208407 A1 zeigt mehrere Varianten von Beladestationen für hängend förderbare Transporttaschen, bei welcher Waren-Einheiten in Transferfächer einer Transfervorrichtung eingebracht werden. Die Transfervorrichtung ist als Rad oder als Rundlauf ausgestaltet. Die Transferfächer der Transfervorrichtung bewegen in einem Transferbereich synchron zu einer Abfolge von geöffneten Transporttaschen. Durch Öffnen einer Klappe wird jeweils ein Transferfach freigegeben, so dass die darin befindliche Wareneinheit in die sich darunter befindende Transporttasche fällt. Mit solch einer Vorrichtung lässt sich ein Strom von Transporttaschen kontinuierlich befüllen.

EP 2418160 A1 zeigt eine weitere Beladestation für in einer Hängeförderanlage transportierte Transporttaschen. Die Transporttaschen weisen einen an einem Laufwagen aufgehängten Rahmenbügel auf, an welchem zwei Enden einer flexiblen Stoffbahn befestigt sind und einen Beutel bilden. Unterhalb des Aufhängehakens des Beutels ist eine Druckplatte angeordnet. In der Beladestation ist eine Kufe angeordnet, welche bei der Bewegung einer Transporttasche durch die Beladestation die Druckplatte und damit auch die Transporttasche von einer Orientierung quer zur Förderrichtung in eine Orientierung parallel zur Förderrichtung drückt und in dieser Orientierung hält. Die Form des Aufhängehakens ist so gewählt, dass der Aufhängehaken dabei im Traghaken des Förderelements nach oben gedrückt wird. Gleichzeitig wird der fest mit der Druckplatte verbundene Rahmenbügel von der senkrechten Ruheposition quer zur Förderrichtung nach aussen gedrückt, und nimmt eine Lage an, in welcher der Rahmenbügel eine Neigung von ca. 45° hat, so dass eine durch den Rahmenbügel definierte obere Taschenöffnung zugänglich wird. In dieser Befüllungsposition kann nun die Transporttasche von der Seite her durch die obere Öffnung befüllt werden. Nach dem Verlassen des Bereichs der Kufe gleitet der Aufhängehaken auf dem Traghaken wieder zurück zu einem Minimum der potenziellen Energie, und die Tasche schwenkt zurück in die damit verbundene Orientierung quer Förderrichtung. Aufgrund der Art der kraft- und formschlüssigen Fixierung der Transporttasche in der Befüllungsposition ist die mögliche Traglast einer Transporttasche begrenzt, da sonst die Transporttasche verklemmen kann, weil beispielsweise die Reibung der Druckplatte mit der Kufe zu gross wird.

WO 2018/142242 A1 zeigt eine Vorrichtung zum automatischen Drehen von in einem im Transportsystem hängend geförderten leeren Transporttaschen oder anderen Transporteinheiten, so dass diese effizient befüllt werden können. Der Laufwagen weist einen Traghaken auf, welche zwei oder mehr stabile Lagerungspositionen eines Traghakens der Transporttasche erlaubt, wobei in einer ersten stabilen Lagerungsposition die Transporttasche quer zu Förderrichtung ausgerichtet ist, und in einer zweiten stabilen Lagerungsposition parallel zu Förderrichtung.

WO 2018/078098 A1 beschreibt eine Beladestation für in einer Hängeförderanlage transportierte Transporttaschen. Die quer zur Förderrichtung angeordneten Transporttasche weist in Förderrichtung eine versteifte Vorderwand auf. Die Transporttasche wird waagrecht zugefördert und für das Beladen angehalten. Ein Aktuator hebt die Vorderwand an, wodurch sich die Transporttasche öffnet. Über eine Rutsche wird eine Waren-Einheit in die Transporttasche eingebracht. Nach der Befüllung wird die nun beladene Transporttasche nach oben weg weitergefördert.

US 2017/0369250 A1 zeigt eine weitere Beladestation für in einer Hängeförderanlage transportierte Transporttaschen. Eine umlaufende Förderkette eines Rundlaufs ist entlang des Umfangs mit Schienensegmenten einer Laufschiene ausgestattet. Transportelemente mit quer zur Förderrichtung angeordneten Transporttaschen werden auf einer Laufschiene zugefördert. Die Transportelemente werden dann einzeln auf ein an die zuführende Laufschiene direkt anschliessendes Schienensegment des Rundlaufs platziert. Der senkrecht zu Förderrichtung angeordnete Rundlauf bewegt das Schienensegment um eine Position weiter auf eine Beladungsposition. Eine Vorderwand der Transporttasche wird abgesenkt, eine Waren-Einheit über die Oberkante der abgesenkten Vorderwand in die nun geöffnete Transporttasche eingebracht, und die Vorderwand wieder angehoben. Der Rundlauf bewegt dann die wieder geschlossene Transporttasche weiter auf die nächste Position, wo sich in Förderrichtung an das Schienensegment eine wegführende Laufschiene anschliesst, auf welche das Transportelement überführt wird.

Es besteht allgemein das Bedürfnis nach Fortschritten in diesem Gebiet der Technik.

US 2535625 zeigt einen faltbaren Rahmen für einen aufhängbaren Kleiderbeutel. Der Rahmen umfasst zwei U-förmige Bügel, die sich auf zwei Gelenkelementen abstützen. Der Kleiderbeutel ist auf den U-förmigen Bügeln aufgehängt. Der Rahmen weist ein innerhalb des Transportbeutels angeordnetes, die zwei Gelenkelemente verbindendes Element auf. Dieses Verbindungelement weist vier Haken auf, an denen Kleiderbügel mit Kleidungsstücken eingehängt werden können, sowie einen Aufhängehaken, mit welchem der Kleiderbeutel an einem Haken aufgehängt werden kann.

CH 713082 A1 zeigt eine Transporttasche für ein schienengeführtes Hängefördersystem, mit einem Laufwagen und einer Transporttasche. Die Transporttasche ist über eine starre Rückwand um eine waagrechte Drehachse drehbar hängend am Laufwagen befestigt. Die Transporttasche weist einen oberen Rahmenbügel und einen unteren Rahmenbügel auf, welche schwenkbar mit der Rückwand und einer Vorderwand verbunden sind. Der obere Rahmenbügel weist Rollelemente auf, die mit einem Aktuator zur Schwenkung des Rahmenbügels in Eingriff gebracht werden können.

EP 3090967 A2 zeigt eine Hängetasche zum Transport von Fördergut in einer Hängefördereinrichtung, mit einem Anhängemittel sowie einer ersten Taschenseitenwand und einer zweiten Taschenseitenwand, die einander gegenüberliegend einen Fördergutaufnahmebereich mit einer Öffnung zwischen sich begrenzen und in einem Klappverbindungsbereich so miteinander verbunden sind, dass sie auseinanderklappbar und zusammenklappbar sind, um die Öffnung aufzuweiten oder zu Die EP 3090967 A2 offenbart die Merkmale des Oberbegriffs des Anspruchs 1.

### Darstellung der Erfindung

Eine Aufgabe der Erfindung ist es, eine Transporttasche für ein Hängefördersystem bereitzustellen, die insbesondere in einem offenbarten Transferverfahren bzw. einer offenbarten Transfervorrichtung vorteilhaft einsetzbar ist.

Diese und andere Aufgaben werden durch die Elemente des unabhängigen Anspruchs gelöst. Weitere vorteilhafte Ausführungsformen gehen ausserdem aus den abhängigen Ansprüchen und der Beschreibung hervor.

Die erfindungsgemässe Lösung kann durch verschiedene, jeweils für sich vorteilhafte und, sofern nicht anders ausgeführt, beliebig miteinander kombinierbare Ausgestaltungen weiter verbessert werden. Auf diese Ausführungsformen und die mit ihnen verbundenen Vorteile ist im Folgenden eingegangen.

Die vorliegenden Offenbarung beschreibt auch eine Vorrichtung zum Transferieren von Waren-Einheiten in Fördereinheiten und/oder aus Fördereinheiten eines Hängefördersystems, welche die oben erwähnten und andere Nachteile nicht aufweist. Insbesondere soll eine solche Transfervorrichtung ein geringes Volumen und einen geringen Grundflächen-Bedarf aufweisen. Sie soll energieeffizient sein, geringe Ausfallwahrscheinlichkeiten aufweisen, wenig fehleranfällig sein, und einen geringen Wartungsbedarf benötigen. Die Herstellung, der Betrieb und der Unterhalt sollen kosteneffizient sein.

Die vorliegenden Offenbarung beschreibt weiter ein Verfahren, mit welchem Waren-Einheiten in Fördereinheiten und/oder aus Fördereinheiten eines Hängefördersystems transferiert werden können In dieser Beschreibung wird der Begriff Waren-Einheiten bzw. Ware synonym verwendet, und kann insbesondere einzelne Stückgüter, aber auch verpackte Waren wie beispielsweise Pakete umfassen, und ganz generell einzeln handhabbare Gegenstände.

Ein erster Aspekt der Offenbarung betrifft vorteilhafte Vorrichtungen zum Transferieren von Waren-Einheiten in Fördereinheiten und/oder aus Fördereinheiten eines Hängefördersystems.

Eine offenbarte Vorrichtung zum Transferieren von Waren-Einheiten in Fördereinheiten und/oder aus Fördereinheiten eines Hängefördersystems weist ein Hängefördersystem auf, auf welchem entlang eines durchgehenden Förderpfads Fördereinheiten hängend förderbar sind. Das Hängefördersystem kann insbesondere ein schienengeführtes Fördersystem oder ein Transportkettenfördersystem sein. In einem Eingangsbereich des Hängefördersystems sind zugeförderte Fördereinheiten zur weiteren Bearbeitung, insbesondere Beladung und/oder Entladung, bereitstellbar. Stromabwärts vom genannten Eingangsbereich ist in einem Transferbereich des Hängefördersystems eine Transfervorrichtung vorgesehen, mit welcher Waren-Einheiten in und/oder aus einer sich im Transferbereich befindenden Fördereinheit transferierbar sind. Stromabwärts vom genannten Transferbereich sind in einem Ausgangsbereich des Hängefördersystems bearbeitete Fördereinheiten für eine weitere Verwendung, insbesondere den Weitertransport, bereitstellbar. Im Transferbereich verläuft der Förderpfad vorteilhaft im Wesentlichen waagrecht.

Die absolute Ausrichtung einer Fördereinheit im Raum im Eingangsbereich und im Transferbereich ist im Wesentlichen gleich, und die relative Ausrichtung der genannten Fördereinheit in Bezug auf die Förderrichtung im Eingangsbereich und im Transferbereich ist im Wesentlichen verschieden. Alternativ oder zusätzlich ist die absolute Ausrichtung einer Fördereinheit im Raum im Transferbereich und im Ausgangsbereich im Wesentlichen gleich, und ist die relative Ausrichtung der genannten Fördereinheit in Bezug auf die Förderrichtung im Transferbereich und im Ausgangsbereich im Wesentlichen verschieden.

In einem vorteilhaften Beispiel einer solchen Transfer-Vorrichtung sind der Förderpfad des Hängefördersystems im Eingangsbereich und der Förderpfad des Hängefördersystems im Transferbereich nicht gefluchtet und stehen in einem ersten Winkel zueinander.

Alternativ oder zusätzlich sind der Förderpfad des Hängefördersystems im Transferbereich und der Förderpfad des Hängefördersystems im Ausgangsbereich nicht gefluchtet und stehen in einem zweiten Winkel zueinander.

In einem vorteilhaften Beispiel einer solchen Transfer-Vorrichtung ist zwischen dem Eingangsbereich und dem Transferbereich des Hängefördersystems ein erster Übergangsbereich angeordnet, in welchem eine Einrichtung vorhanden ist, mit welcher die Ausrichtung einer Fördereinheit in Bezug auf die Förderrichtung änderbar ist.

Alternativ oder zusätzlich ist in einer Transfer-Vorrichtung vorteilhaft zwischen dem Transferbereich und dem Ausgangsbereich ein zweiter Übergangsbereich angeordnet, in welchem eine Einrichtung vorhanden ist, mit welcher die Ausrichtung einer Fördereinheit in Bezug auf die Förderrichtung änderbar ist.

Vorteilhaft ist bei einer Transfer-Vorrichtung zwischen dem Eingangsbereich und dem Transferbereich des Hängefördersystems ein erster Übergangsbereich angeordnet; und/oder zwischen dem Transferbereich und dem Ausgangsbereich ein zweiter Übergangsbereich angeordnet; und ist ein Kulissenführungselement vorgesehen, welches eine Drehbewegung einer Fördereinheit im ersten Übergangsbereich bzw. im zweiten Übergangsbereich begrenzt.

Besonders vorteilhaft ist bei dem vorgenannten Beispiel einer Transfer-Vorrichtung eine mit einer Fördereinheit im ersten Übergangsbereich bzw. zweiten Übergangsbereich wechselwirkende Oberfläche eines Kulissenführungselements im Wesentlichen ein Ausschnitt einer Hüllebene, wobei die Hüllebene definiert ist durch den hypothetischen Pfad einer Aussenkante einer Fördereinheit, die im entsprechenden Übergangsbereich entlang des Förderpfads stromabwärts verschoben wird, wenn die genannte Fördereinheit bei dieser Verschiebung ihre absolute Ausrichtung im Raum im Wesentlichen beibehält.

Alternativ oder zusätzlich dient bei einer solchen Transfer-Vorrichtung als Kulissenführungselement ein Anschlagselement, dessen mit der Fördereinheit wechselwirkende Oberfläche im Wesentlichen parallel zum Förderpfad im Transferbereich und zur Senkrechten ausgerichtet ist.

Vorteilhaft beträgt bei einer Transfer-Vorrichtung der erste Winkel ≥ 45°, bevorzugt ≥ 60°, und besonders bevorzugt ≥ 80°.

Vorteilhaft beträgt bei einer Transfer-Vorrichtung der erste Winkel ≤ 160°, bevorzugt ≤ 120°, und besonders bevorzugt ≤ 100°.

Vorteilhaft beträgt bei einer Transfer-Vorrichtung der zweite Winkel ≥ 45°, bevorzugt ≥ 60°, und besonders bevorzugt ≥ 80°.

Vorteilhaft beträgt bei einer Transfer-Vorrichtung der zweite Winkel ≤ 160°, bevorzugt ≤ 120°, und besonders bevorzugt ≤ 100°.

Besonders vorteilhaft beträgt bei einer Transfer-Vorrichtung der erste Winkel und/oder der zweite Winkel im Wesentlichen 90°.

Das Hängefördersystem einer offenbarten Transfer-Vorrichtung kann ein schienengeführtes Fördersystem sein, auf welchem ein Laufwagen einer Fördereinheit rollend und/oder gleitend verschiebbar ist.

Das Hängefördersystem einer offenbarten Transfer-Vorrichtung weist vorteilhaft mindestens eine Fördereinheit auf.

Besonders vorteilhaft weist die mindestens eine Fördereinheit des Hängefördersystems der offenbarten Transfer-Vorrichtung ein Förderelement mit einem am Förderelement angebrachten Traghaken sowie ein Transportelement mit einem am Transportelement angebrachten Aufhängehaken auf. Der Aufhängehaken ist im Traghaken hängend gelagert und kann im Traghaken mindestens zwei stabile Lagerungspositionen einnehmen. Der Aufhängehaken in seiner ersten stabilen Lagerungsposition ist gegenüber dem Aufhängehaken in seiner zweiten stabilen Lagerungspositionen um einen bestimmten Winkel um eine Achse gedreht.

Vorteilhaft ist die genannte Drehachse die Senkrechte.

Das Förderelement der mindestens einen Fördereinheit des Hängefördersystems der offenbarten Transfer-Vorrichtung ist vorteilhaft ein Laufwagen eines schienengeführten Fördersystems oder ein Förderkettenglied eines Transportkettenfördersystems.

Das Transportelement der mindestens einen Fördereinheit des Hängefördersystems der offenbarten Transfer-Vorrichtung ist vorteilhaft eine Transporttasche, ein Kleiderbügel, insbesondere ein Hänger-Kleiderbügel oder ein Klemmbügel, oder eine Vorrichtung zum Halten von zwei oder mehr Behältern oder anderen Gegenständen und Objekten.

Der Traghaken des Förderelements der mindestens einen Fördereinheit ist in einem besonders vorteilhaften Beispiel der offenbarten Transfer-Vorrichtung derart ausgestaltet, dass in einer bestimmten räumlichen Orientierung des Traghakens der Aufhängehaken des Transportelements der mindestens einen Fördereinheit eine erste stabile Lagerungsposition einnehmen kann, in welcher sich der Aufhängehaken in einer ersten Ebene ausrichtet; und in der gleichen räumlichen Orientierung des Traghakens der Aufhängehaken eine zweite stabile Lagerungsposition einnehmen kann, in welcher sich der Aufhängehaken in einer zweiten Ebene ausrichtet; wobei die erste Lagerungsposition und die zweite Lagerungsposition lokalen Minima der potenziellen Energie des hängend gelagerten Transportelements entsprechen; und wobei der Aufhängehaken durch Drehen des Aufhängehakens um einen bestimmten Drehwinkel zwischen der ersten stabilen Lagerungsposition und der zweiten stabilen Lagerungsposition hin und her überführbar ist.

Der Traghaken des Förderelements der mindestens einen Fördereinheit ist in einem anderen besonders vorteilhaften Beispiel der offenbarten Transfer-Vorrichtung derart ausgestaltet, dass in einer bestimmten ersten räumlichen Orientierung des Traghakens der Aufhängehaken des Transportelements der mindestens einen Fördereinheit eine erste stabile Lagerungsposition einnehmen kann, in welcher sich der Aufhängehaken in einer ersten Ebene ausrichtet. In einer von der bestimmten ersten räumlichen Orientierung verschiedenen zweiten räumlichen Orientierung des Traghakens kann der Aufhängehaken eine zweite stabile Lagerungsposition einnehmen, in welcher sich der Aufhängehaken in einer zweiten Ebene ausrichtet. In der bestimmten ersten räumlichen Orientierung des Traghakens entspricht die erste Lagerungsposition einem Minimum der potenziellen Energie des hängend gelagerten Transportelements. In der bestimmten zweiten räumlichen Orientierung des Traghakens entspricht die zweite Lagerungsposition einem Minimum der potenziellen Energie des hängend gelagerten Transportelements. Der Aufhängehaken ist durch Drehen des Traghakens um einen bestimmten Drehwinkel zwischen der ersten Lagerungsposition und der zweiten Lagerungsposition hin und her übarführbar

Vorteilhaft ist bei dem genannten Beispiel einer offenbarten Transfer-Vorrichtung der Aufhängehaken durch Drehen des Förderelements um die Achse der Förderrichtung zwischen der ersten Lagerungsposition und der zweiten Lagerungsposition hin und her übarführbar

Ein zweiter Aspekt der Offenbarung betrifft vorteilhafte Verfahren zum Transferieren von Waren-Einheiten in Fördereinheiten und/oder aus Fördereinheiten eines Hängefördersystems.

Ein offenbartes Verfahren zum Transferieren von Waren-Einheiten in und/oder aus Fördereinheiten eines Hängefördersystems umfasst die Schritte:
- Bereitstellung eines Hängefördersystems mit durchgehendem Förderpfad für den hängenden Transport von Fördereinheiten;
- Bereitstellung einer Fördereinheit in einem Eingangsbereich des genannten Hängefördersystems, wobei die Fördereinheit im genannten Eingangsbereich eine erste Orientierung relativ zum Förderpfad aufweist;
- Überführung der bereitgestellten Fördereinheit entlang des Förderpfads vom Eingangsbereich in einen Transferbereich des Hängefördersystems, wobei die Fördereinheit im genannten Transferbereich eine zweite Orientierung relativ zum Förderpfad aufweist;
- Transferierung mindestens einer Waren-Einheit in diese Fördereinheit und/oder aus dieser Fördereinheit;
- Überführung der Fördereinheit entlang des Förderpfads vom Transferbereich in einen Ausgangsbereich des Hängefördersystems, wobei die Fördereinheit im genannten Ausgangsbereich eine dritte Orientierung relativ zum Förderpfad aufweist.

Im Transferbereich verläuft der Förderpfad der Fördereinheit im Wesentlichen waagrecht.

Die absolute Ausrichtung der Fördereinheit im Raum im Eingangsbereich und im Transferbereich ist im Wesentlichen gleich, und die erste Orientierung und die zweite Orientierung der Fördereinheit relativ zum Förderpfad im Eingangsbereich und im Transferbereich ist im Wesentlichen verschieden. Alternativ oder zusätzlich ist die absolute Ausrichtung der Fördereinheit im Raum im Transferbereich und im Ausgangsbereich im Wesentlichen gleich, und die zweite Orientierung und ist die dritte Orientierung der Fördereinheit relativ zum Förderpfad im Transferbereich und im Ausgangsbereich im Wesentlichen verschieden.

Vorteilhaft unterscheiden sich in einem solchen Verfahren die erste Orientierung der Fördereinheit relativ zum Förderpfad und die zweite Orientierung der Fördereinheit relativ zum Förderpfad, vorteilhaft um einen Winkel von 30° bis 60° und besonders vorteilhaft um einen Winkel von im Wesentlichen 90°, während die absolute Ausrichtung der Fördereinheit im Raum während der Überführung der Fördereinheit vom Eingangsbereich in den Transferbereich im Wesentlichen unverändert bleibt.

Alternativ oder zusätzlich unterscheiden sich die zweite Orientierung der Fördereinheit relativ zum Förderpfad und die dritte Orientierung der Fördereinheit relativ zum Förderpfad, vorteilhaft um einen Winkel von 30° bis 60° und besonders vorteilhaft um einen Winkel von im Wesentlichen 90°, während die absolute Ausrichtung der Fördereinheit im Raum während der Überführung der Fördereinheit vom Transferbereich in den Ausgangsbereich im Wesentlichen unverändert bleibt.

Vorteilhaft ist das bereitgestellte Hängefördersystem das Hängefördersystem einer offenbarten Transfervorrichtung, wie sie obenstehend beschrieben worden ist.

Bei einer vorteilhaften Variante eines solchen Verfahrens wird eine Änderung der Orientierung der Fördereinheit relativ zum Förderpfad zumindest teilweise durch mindestens einen Aktuator erzielt.

Alternativ oder zusätzlich wird bei einer vorteilhaften Variante eines solchen Verfahrens eine Änderung der Orientierung der Fördereinheit relativ zum Förderpfad zumindest teilweise durch eine Drehung des Förderelements um die Achse der Förderrichtung erzielt. Alternativ oder zusätzlich wird bei einer vorteilhaften Variante eines solchen Verfahrens eine Änderung der Orientierung der Fördereinheit relativ zum Förderpfad zumindest teilweise durch Kulissenführungselemente erzielt, welche mit der Fördereinheit wechselwirken.

Besonders vorteilhaft ist bei dem vorgenannten Beispiel eines Verfahrens die mit der Fördereinheit wechselwirkende Oberfläche eines Kulissenführungselements im Wesentlichen ein Ausschnitt einer Hüllebene, wobei die Hüllebene definiert ist durch den hypothetischen Pfad einer Aussenkante einer Fördereinheit, die im entsprechenden Übergangsbereich entlang des Förderpfads stromabwärts verschoben wird, wenn die genannte Fördereinheit bei dieser Verschiebung ihre absolute Ausrichtung im Raum im Wesentlichen beibehält.

Vorteilhaft dient als Kulissenführungselement ein Anschlagselement, dessen mit der Fördereinheit wechselwirkende Oberfläche im Wesentlichen parallel zum Förderpfad im Transferbereich ist.

Ein dritter Aspekt der Offenbarung betrifft erfindungsgemässe Transporttaschen für Hängefördersysteme.

Eine erfindungsgemässe Transporttasche für ein Hängefördersystem, insbesondere ein schienengeführtes Fördersystem oder ein Transportkettenfördersystem, umfasst ein Förderelement, insbesondere einen Laufwagen eines schienengeführten Fördersystems oder einem Förderkettenglied eines Transportkettenfördersystems, und eine Transporttasche zur Aufnahme einer oder mehrerer Waren-Einheiten. Die Transporttasche ist über ein Aufhängemittel um eine Drehachse drehbar hängend an einem Tragmittel des Förderelements befestigt. Die Transporttasche weist zwei Rahmenbügel auf, welche schwenkbar mit dem Aufhängemittel verbunden sind. Die zwei Rahmenbügel sind im Wesentlichen 2-zählig drehsymmetrisch zueinander, nicht jedoch spiegelsymmetrisch zueinander.

Die Transporttasche weist vorteilhaft mindestens eine Wand auf, welche den Aufnahmebereich der Transporttasche definiert, und welche an zwei Rändern der Wand mit jeweils einem von dem Aufhängemittel abgewandten Bereich eines der beiden Rahmenbügel schwenkbar verbunden ist.

Die Wand kann als Trageschlaufe in Form einer Bahn aus einem flexiblen Material, beispielsweise einem textilen Flächengebilde oder einer Folie, realisiert sein.

Alternativ können eine starre erste Wand und eine starre zweite Wand durch einen flexiblen Taschenboden verbunden sein.

Optional können Seitenwände vorhanden sein.

Die Transporttasche ist erfindungsgemäß über ein Aufhängemittel um eine Drehachse drehbar hängend an einem Tragmittel des Förderelements befestigt.

Erfindungsgemäß sind bei einer solchen Transporttasche die zwei Rahmenbügel um die Drehachse im Wesentlichen 2-zählig drehsymmetrisch zueinander, nicht jedoch spiegelsymmetrisch zueinander.

Erfindungsgemäß weist ein erster der beiden Rahmenbügel einen ersten Eingriffsbereich auf, welcher geeignet ist, von einem Aktuator zur Schwenkung des ersten Rahmenbügels in Eingriff gebracht zu werden; und weist ein zweiter der beiden Rahmenbügel einen zweiten Eingriffsbereich auf, welcher geeignet ist, von einem Aktuator zur Schwenkung des zweiten Rahmenbügels in Eingriff gebracht zu werden. Der erste Eingriffsbereich des ersten Rahmenbügels ist um die Drehachse 2-zählig drehsymmetrisch zu dem zweiten Eingriffsbereich des zweiten Rahmenbügels angeordnet.

In einer besonders vorteilhaften Ausführungsform einer solchen Transporttasche weist die Transporttasche mindestens eine Wand auf, welche den Aufnahmebereich der Transporttasche definiert, und welche an zwei Rändern der Wand mit jeweils einem von dem Aufhängemittel abgewandten Bereich eines der beiden Rahmenbügel schwenkbar verbunden ist. Der erste Eingriffsbereich steht mit Blickrichtung senkrecht zu der mindestens einen Wand auf einer ersten Seite über eine Aussenkante der mindestens einen Wand vor. Der zweite Eingriffsbereich steht mit Blickrichtung senkrecht zu der mindestens einen Wand auf einer der ersten Seite gegenüberliegenden zweiten Seite über die Aussenkante der mindestens einen Wand vor.

Dabei steht vorteilhaft der erste Eingriffsbereich auf der ersten Seite seitlich über die Aussenkante der mindestens einen Wand vor; und der zweite Eingriffsbereich steht auf der zweiten Seite seitlich über die Aussenkante der mindestens einen Wand vor.

In einer anderen besonders vorteilhaften Ausführungsform einer solchen Transporttasche weist die Transporttasche mindestens eine Wand auf, welche den Aufnahmebereich der Transporttasche definiert, und welche an zwei Rändern der Wand mit jeweils einem von dem Aufhängemittel abgewandten Bereich eines der beiden Rahmenbügel schwenkbar verbunden ist. Der erste Eingriffsbereich steht mit Blickrichtung senkrecht zu der mindestens einen Wand auf einer ersten Seite in einem ersten Bereich über eine Aussenkante der mindestens einen Wand vor, und steht auf einer der ersten Seite gegenüberliegenden zweiten Seite in einem zweiten Bereich über die Aussenkante der mindestens einen Wand vor. Der zweite Eingriffsbereich steht auf der ersten Seite in einem zweiten Bereich über die Aussenkante vor, und steht auf der zweiten Seite in einem ersten Bereich über die Aussenkante vor.

Vorteilhaft ist bei solchen Transporttaschen der erste Eingriffsbereich als ein oder mehrere Abschnitte des ersten Rahmenbügels ausgestaltet; und ist der zweite Eingriffsbereich als ein oder mehrere Abschnitte des zweiten Rahmenbügels ausgestaltet.

In einer alternativen vorteilhaften Ausführungsform können der erste Eingriffsbereich und der zweite Eingriffsbereich als den Rahmenbügeln befestigte vorstehende starre Laschen oder Bolzen ausgestaltet sein.

Eine solche Transporttasche ist vorteilhaft mit dem Förderelement über ein Drehgelenk um die senkrechte Drehachse drehbar verbunden.

Alternativ oder zusätzlich weist eine solche Transporttasche einen Aufhängehaken auf; weist das Förderelement einen Traghaken auf; und ist der Aufhängehaken im Traghaken hängend gelagert; wobei der Aufhängehaken im Traghaken mindestens zwei stabile Lagerungspositionen einnehmen kann, und wobei der Aufhängehaken in einer ersten stabilen Lagerungsposition gegenüber dem Aufhängehaken in einer zweiten stabilen Lagerungsposition um einen bestimmten Winkel gedreht ist.

Beispiele solcher Traghaken-Aufhängehaken-Systeme sind in WO 2018/142242 A1 offenbart.

Vorteilhaft ist bei der vorgenannten Ausführungsvariante einer Transporttasche der Traghaken des Förderelements derart ausgestaltet, dass in einer bestimmten räumlichen Orientierung des Traghakens der Aufhängehaken der Transporttasche eine erste stabile Lagerungsposition einnehmen kann, in welcher sich der Aufhängehaken in einer ersten Ebene ausrichtet; und in der gleichen räumlichen Orientierung des Traghakens der Aufhängehaken eine zweite stabile Lagerungsposition einnehmen kann, in welcher sich der Aufhängehaken in einer zweiten Ebene ausrichtet; wobei die erste Lagerungsposition und die zweite Lagerungsposition lokalen Minima der potenziellen Energie der hängend gelagerten Transporttasche entsprechen; und wobei der Aufhängehaken durch Drehen des Aufhängehakens um einen bestimmten Drehwinkel zwischen der ersten stabilen Lagerungsposition und der zweiten stabilen Lagerungsposition hin und her überführbar ist.

Beispiele solcher Traghaken-Aufhängehaken-Systeme sind ebenfalls aus WO 2018/142242 A1 bekannt.

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands, und sind nicht dazu geeignet, die Erfindung auf die hierin offenbarten Merkmale zu beschränken. Für gleiche oder gleich wirkende Teile werden in den nachfolgenden Figuren und der dazugehörigen Beschreibung gleiche oder ähnliche Bezugszeichen verwendet.
- Figur 1: zeigt schematisch im Querschnitt ein nicht erfindungsgemäßes mögliches Beispiel einer vorteilhaften Transporttaschen-Fördereinheit für ein schienengeführtes Hängefördersystem, (a) als leere Tasche in geschlossenem Zustand und (b) als leere Tasche in geöffnetem Zustand.

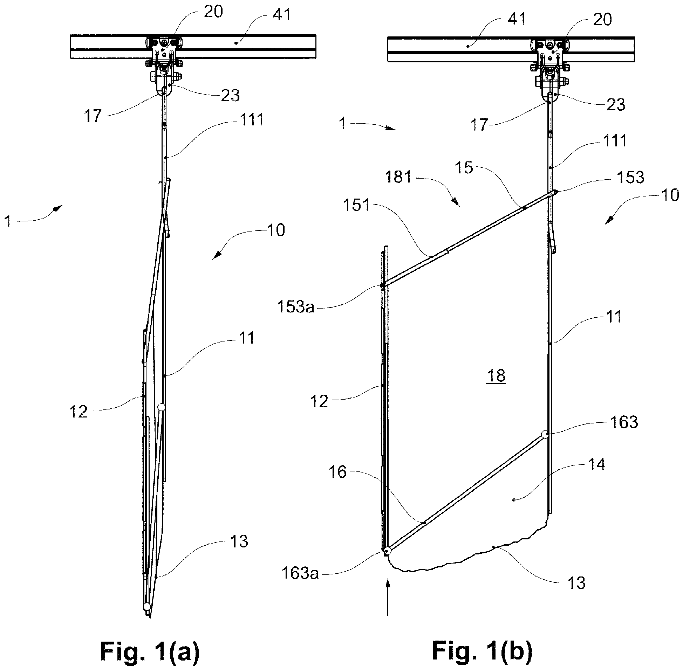

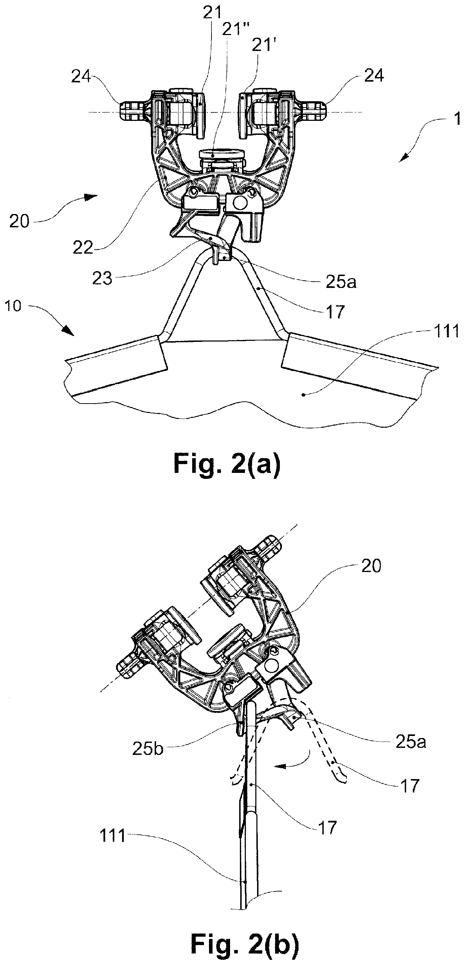

- Figur 2: zeigt schematisch den Laufwagen und einen oberen Teil der Transporttasche der Fördereinheit aus Figur 1, mit Blickrichtung entgegen der Förderrichtung, und nicht dargestellter Laufschiene, (a) mit dem Laufwagen in einer ersten rotatorischen Ausrichtung um die Achse der Förderrichtung und dem Aufhängehaken der Transporttasche in einer ersten stabilen Lagerungsposition des Traghakens des Laufwagens, und (b) mit dem Laufwagen in einer zweiten rotatorischen Ausrichtung um die Achse der Förderrichtung und dem Aufhängehaken der Transporttasche in einer zweiten stabilen Lagerungsposition des Traghakens des Laufwagens.
- Figur 3: zeigt schematisch einen anderen möglichen Laufwagen einer Fördereinheit, angeordnet in der Laufschiene eines Hängefördersystems.
- Figur 4: zeigt schematisch im Querschnitt ein anderes nicht erfindungsgemäßes mögliches Beispiel einer vorteilhaften Transporttaschen-Fördereinheit für ein schienengeführtes Hängefördersystem, (a) als leere Tasche in geschlossenem Zustand und (b) als leere Tasche in geöffnetem Zustand.
- Figur 5: zeigt schematisch im Querschnitt ein weiteres nicht erfindungsgemäßes mögliches Beispiel einer vorteilhaften Transporttaschen-Fördereinheit für ein schienengeführtes Hängefördersystem, (a) als leere Tasche in geschlossenem Zustand (ausgezogene Linien) und in geöffnetem Zustand (gestrichelte Linien), und (b) als mit einer Waren-Einheit beladene Tasche im geschlossenen Zustand.
- Figur 6: zeigt schematisch in Aufsicht ein nicht erfindungsgemäßes mögliches Beispiel einer Transfervorrichtung.
- Figur 7: zeigt schematisch in Seitenansicht eine Transporttasche, (a) im ersten Übergangsbereich der Transfervorrichtung aus Figur 6, und (b) im zweiten Übergangsbereich der genannten Transfervorrichtung.
- Figur 8: zeigt schematisch in Aufsicht ein anderes nicht erfindungsgemäßes mögliches Beispiel einer Transfervorrichtung.
- Figur 9: zeigt schematisch in Seitenansicht eine Transporttasche, (a) im ersten Übergangsbereich der Transfervorrichtung aus Figur 8, und (b) im zweiten Übergangsbereich der genannten Transfervorrichtung.
- Figur 10: zeigt schematisch in Aufsicht ein weiteres nicht erfindungsgemäßes mögliches Beispiel einer Transfervorrichtung.
- Figur 11: zeigt schematisch eine erfindungsgemäße Ausführungsform einer vorteilhaften Transporttaschen-Fördereinheit für ein schienengeführtes Hängefördersystem, als leere Tasche in geschlossenem Zustand, (a) in einer Seitenansicht und (b) in einer Frontansicht mit Blick entgegen der Förderrichtung.
- Figur 12: zeigt schematisch in Aufsicht ein nicht erfindungsgemäßes Beispiel einer Transfervorrichtung.
- Figur 13: zeigt schematisch in Aufsicht noch ein weiteres nicht erfindungsgemäßes Beispiel einer Transfervorrichtung, im Übergangsbereich zwischen Eingangsbereich und Transferbereich.
- Figur 14: zeigt schematisch in Aufsicht noch ein anderes nicht erfindungsgemäßes Beispiel einer Transfervorrichtung, im Übergangsbereich zwischen Transferbereich und Ausgangsbereich.
- Figur 15: zeigt schematisch in Aufsicht nochmals ein weiteres nicht erfindungsgemäßes Beispiel einer Transfervorrichtung, im Übergangsbereich zwischen Transferbereich und Ausgangsbereich.
- Figur 16: zeigt schematisch eine vorteilhafte Transporttasche, wie sie insbesondere für die Transfervorrichtung in den Figuren 14 und 15 geeignet ist, (a) in Aufsicht, und (b) im Querschnitt.
- Figur 17: zeigt schematisch eine vorteilhafte Ausführungsform einer vorteilhaften Transporttaschen-Fördereinheit analog zu Figur 11, in einer mit Blick entgegen der Förderrichtung.

### Wege zur Ausführung der Erfindung

Eine vorteilhafte Fördereinheit 1, wie sie in einer nicht erfindungsgemässen Transfervorrichtung verwendet werden kann, ist in den Figuren 1 und 2 schematisch dargestellt. Auf einer Laufschiene 41 eines schienengeführten Hängefördersystems ist ein Laufwagen 20 rollend verschiebbar angeordnet. An einem Traghaken 23 des Laufwagens 20 ist über einen Aufhängehaken 17 eine Transporttasche 10 hängend gelagert.

Der Laufwagen 20 weist eine Tragstruktur 22 auf, an der drei Laufrollen-Paare 21, 21', 21" drehbar gelagert sind. Die beiden Laufrollen-Paare 21, 21' rollen im Normalbetrieb auf entsprechenden Laufflächen der Laufschiene 41 (in Figur 2 zur besseren Übersichtlichkeit nicht gezeigt) und tragen das Gewicht der Fördereinheit 1. Das Laufrollen-Paar 21" ist im Normalbetrieb als Führungsrolle in einem Führungskanal der Laufschiene 41 angeordnet, und nimmt bei einer Kurvenführung der Laufschiene radiale Kräfte auf, so dass ein Verkanten des Laufwagens 20 vermieden wird. An der Tragstruktur 22 des Laufwagens 20 sind seitliche Eingriffsbolzen 24 vorgesehen, welche mit Aktuatorvorrichtungen des Fördersystems in Eingriff gebracht werden können, beispielsweise Schneckenantrieben, Kettenantrieben oder Vereinzelungsvorrichtungen, um den Laufwagen entlang der Laufschiene 41 zu bewegen, zu stoppen oder freizugeben.

Die Transporttasche 10 umfasst eine erste Taschenwand 11, eine zweite Taschenwand 12 und einen Taschenboden 13. Die beiden Taschenwände und der Taschenboden sind seitlich mit je einer Taschenseitenwand 14 abgeschlossen, und definieren zusammen als Innenraum der Transporttasche einen Beutel 18 mit einer gegen oben offenen Taschenöffnung. Im gezeigten Beispiel ist die erste Taschenwand 11 und die zweiten Taschenwand 12 im Wesentlichen starr ausgestaltet, beispielsweise in Form einer Platte aus Polymermaterial. Es ist auch möglich, eine oder beide Taschenwände als starren Rahmen auszugestalten, beispielsweise aus Draht, welcher mit einem elastischen und/oder flexiblen, flächigen Material bedeckt ist, beispielsweise einem Textilstoff oder einem Netz. Der Taschenboden 13 ist im gezeigten Beispiel als elastische und/oder flexible Folie oder als textiles Flächenprodukt ausgestaltet, welche die unteren Enden der beiden Taschenwände 11, 12 verbindet. Die beiden Taschenseitenwände 14 sind ebenfalls als elastische und/oder flexible Folien oder textile Flächenprodukte ausgestaltet. Die erste Taschenwand 11 weist einen oberen Bereich 111 auf, an welchem der Aufhängehaken 17 angeordnet ist. Der Aufhängehaken 17 ist im gezeigten Beispiel als Drahtschleife eines Drahtrahmens der ersten Taschenwand 11 ausgestaltet.

Die erste Taschenwand 11 und die zweite Taschenwand 12 sind über zwei schwenkbar 153, 153a, 163, 163a an den genannten Taschenwänden befestigte Rahmenbügel 15, 16 verbunden, so dass die zweite Taschenwand 12 in Bezug auf die erste Taschenweitenwand 11 geschwenkt und/oder verschoben werden kann. Im gezeigten Beispiel sind die Taschenseitenwände 14 an einem oberen Ende mit dem ersten Rahmenbügel 15 verbunden.

In einem geschlossenen Zustand der leeren Transporttasche 10, wie in Figur 1(a) dargestellt, liegt die zweiten Taschenwand 12 aufgrund des Eigengewichts der zweiten Taschenwand 12, des Taschenbodens 13 und der Rahmenbügel 15, 16 maximal nach unten geschwenkt nahe an der ersten Taschenwand 11.

In einem geöffneten Zustand der leeren Transporttasche 10, wie in Figur 1(b) dargestellt, ist die zweite Taschenwand 12 gegenüber der ersten Taschenwand 11 nach oben und von dieser weg geschwenkt, so dass durch die obere Taschenöffnung 181 das Tascheninnere 18 zugänglich wird. Das Anheben der zweiten Taschenwand kann beispielsweise durch das Schwenken des ersten Rahmenbügels 15 und/oder des zweiten Rahmenbügels 16 erfolgen, oder durch das Anheben eines unteren Endes der starren zweiten Taschenwand 12 (durch Pfeil angedeutet).

Die Förderrichtung der gezeigten Fördereinheit kann sowohl nach links als auch nach rechts gehen. In Förderrichtung links ist die zweite Taschenwand 12 in Laufrichtung die führende Wand, und die erste Taschenwand 11 die nachfolgende Wand. In Förderrichtung rechts ist die erste Taschenwand 11 in Laufrichtung die führende Wand, und die zweite Taschenwand 12 die nachfolgende Wand.

Anstelle der besprochenen Transporttasche können auch andere funktional analoge Transporttaschen verwendet werden, wie sie nachfolgend besprochen werden, oder Transporttaschen wie sie beispielsweise in den Figuren 1 und 1B der WO 2018/142242 A1 gezeigt sind.

Der Traghaken 23 des Laufwagens 20 ist derart ausgestaltet, dass er in der Normallage der Laufschiene, in einer horizontalen Ausrichtung [dargestellt in Figur 2(a)], in welcher die Drehachsen der Laufrollen-Paare 21, 21' waagrecht ausgerichtet sind, eine einzige, erste stabile Lagerungsposition 25a aufweist, in welcher der Aufhängehaken 17 der Transporttasche 10 stabil aufliegt. In dieser ersten Lagerungsposition 25a, der Figur 1 entsprechend, ist die Transporttasche quer zur Förderrichtung bzw. Längsachse der Laufschiene (nicht dargestellt) ausgerichtet.

Wird der Laufwagen 20 in Förderrichtung bzw. Richtung der Längsachse der Laufschiene 41 um 45° rotiert [dargestellt in Figur 2(b)], so wird eine andere Stelle des Traghakens 23 zu einer zweiten stabilen Lagerungsposition 25b, in welcher der Aufhängehaken 17 der Transporttasche 10 stabil aufliegen kann. In dieser zweiten Lagerungsposition 25a ist die Transporttasche parallel zur Förderrichtung bzw. Längsachse der Laufschiene 41 ausgerichtet.

Die Rotation des Laufwagens um die Achse der Förderrichtung ergibt sich durch eine entsprechende Verdrehung der Laufschiene um 45°, beispielsweise durch eine vorübergehende Rotation eines Teilsegments der Laufschiene um die Schienenachse, auf der sich der Laufwagen befindet. Ebenso kann die Rotation der Laufwagens während der Förderung entlang der Laufschiene erfolgen, indem über einen gewissen Streckenabschnitt die Laufschiene kontinuierlich verdrillt ausgestaltet ist.

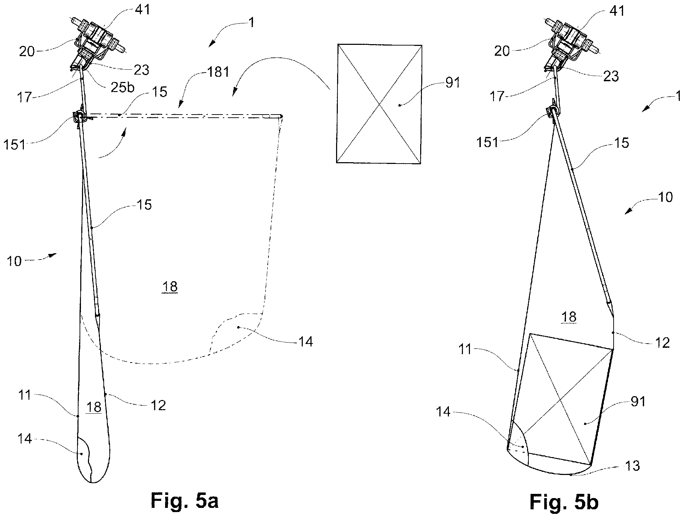

Im gezeigten Beispiel des Laufwagens, welches der Figur 5A in der WO 2018/142242 A1 entspricht, ist der Traghaken 23 derart ausgestaltet, dass in der um 45° gedrehten Ausrichtung des Laufwagens sowohl die erste stabile Lagerungsposition 25a (gestrichelt dargestellter Aufhängehaken 17) als auch die zweite stabile Lagerungsposition 25b zur Verfügung stehen, welche durch einen erhöhten Zwischenabschnitt getrennt sind. Die Überführung der Transporttasche bzw. des Aufhängehakens 17 zwischen den beiden stabilen Lagerungspositionen 25a, 25b kann durch eine Aktuatorvorrichtung erfolgen, welche die Transporttasche und damit auch den Aufhängehaken um die Senkrechte

Beträgt der Rotationswinkel des gezeigten Laufwagens mehr als 45°, beispielsweise 60°, so steht nur noch die zweite stabile Lagerungsposition 25b zur Verfügung, da die erste Position 25a kein lokales Minimum der potenziellen Energie mehr darstellt. Wird der Laufwagen von der waagrechten Ausrichtung (Rotation 0°) um einen solchen Winkel gedreht, so rutscht der Aufhängehaken 17 selbsttätig schwerkraftgetrieben in die neue, einzige stabile Lagerungsposition 25b. Anstatt einen höheren Rotationswinkel des Laufwagens zu wählen, kann alternativ der Traghaken so ausgestaltet sein, dass schon bei geringeren Rotationswinkeln des Laufwagens nur noch eine stabile Lagerungsposition existiert.

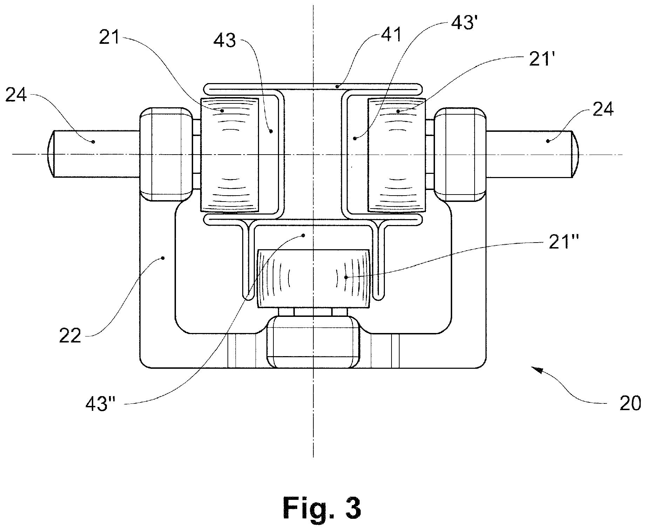

Eine weitere, beispielhafte Variante eines Laufwagens 20 ist in Figur 3 dargestellt. Der Laufwagen 20 weist eine stabile Tragstruktur 22 mit drei Laufrollen-Paaren 21, 21', 21" und zwei Eingriffsbolzen 24 auf. Der Laufwagen 20 ist auf eine entsprechende Laufschiene 41 eines Hängefördersystems angepasst. Die Laufschiene 41 umfasst drei Kanäle, wobei ein nach unten gerichteter Kanal 43" in der dargestellten, waagrecht ausgerichteten Laufschiene 41 als Führungskanal 43"dient, in welcher die Rolle 21" als Führungsrolle läuft. Die beiden Laufrollen-Paare 21, 21' sind in den beiden anderen Kanälen 43, 43' der Laufschiene angeordnet, und laufen in der gezeigten waagrechten Anordnung auf den unterliegenden Seitenflächen dieser Kanäle. Zur Kopplung eines Transportelements wie beispielsweise einer Transporttasche an den Laufwagen ist unterhalb der Führungsrolle 21" an der Tragstruktur 22 eine geeignete Einrichtung (nicht dargestellt) angeordnet, beispielsweise ein Traghaken wie im obenstehend diskutierten Beispiel.

Die Laufschiene kann mit geeigneten Befestigungselementen an einer übergeordneten Struktur befestigt werden, und ist im gezeigten Beispiel aus einem gefalteten Rohrprofil gefertigt. Ebenfalls kosteneffizient ist eine Fertigung als Stranggussprofil. Komplizierter geformte Laufschienen können auch durch Fräsen, Giessen, Sintern oder 3D-Druck hergestellt werden.

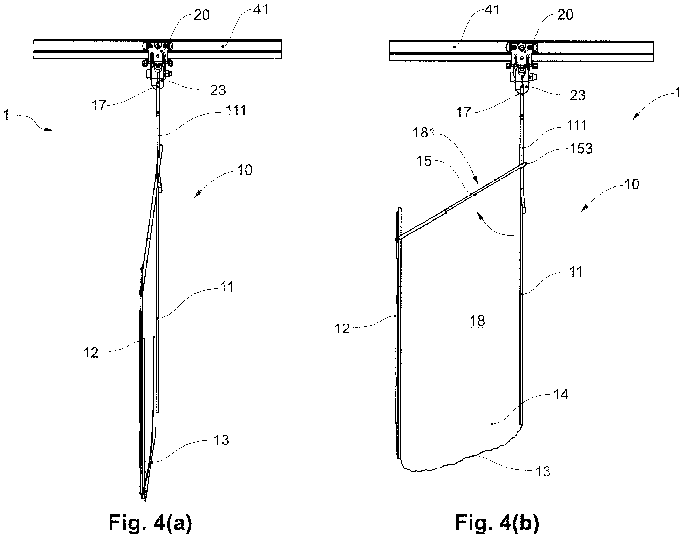

Eine weitere vorteilhafte Fördereinheit 1 ist in Figur 4 dargestellt. Der Laufwagen 20 der Fördereinheit entspricht demjenigen aus Figur 1. Die Transporttasche 10 weist hingegen im Vergleich zum Beispiel in Figur 1 nur einen ersten Rahmenbügel 15 auf. Als Folge davon weist die zweite Taschenwand 12 in Bezug auf die erste Taschenwand 11 zwei Freiheitsgrade auf, und kann auch in Bezug auf die erste Taschenwand 11 im Rahmen des geometrisch Möglichen frei rotieren.

Um die leere Transporttasche vom geschlossenen Zustand [Figur 4(a)] in den geöffneten Zustand [Figur 4(b)] zu überführen, kann der Rahmenbügel 15 von einer im Wesentlichen senkrechten Orientierung in eine geneigte oder waagrechte Orientierung geschwenkt werden, beispielsweise durch eine geeignete Aktuatorvorrichtung. Dadurch wird die Taschenöffnung 181 geöffnet, und das Tascheninnere 18 zugänglich.

Noch eine weitere vorteilhafte Fördereinheit 1 ist in den Figuren 5a, 5b dargestellt, mit Blickrichtung entlang der Achse der Laufschiene 41. Der Laufwagen 20 und die Laufschiene 41 entsprechen dem Beispiel aus Figur 3. Der Traghaken 23 entspricht dem Traghaken aus Figur 2. Die Laufschiene 41 ist gegenüber der waagrechten Orientierung um einen bestimmten Winkel rotiert.

Die Transporttasche 10 umfasst einen Aufhängehaken 17, der in der zweiten, stabilen Lagerungsposition 25b des Traghakens 23 aufliegt, so dass die Transporttasche 10 parallel zur Förderrichtung bzw. der Achse der Laufschiene 41 ausgerichtet ist.

An einem unteren Ende des Aufhängehakens 17 ist ein geschlossener rechteckiger Rahmenbügel 15 über ein Gelenkelement 151 mit dem Aufhängehaken 17 schwenkbar verbunden. Eine erste Längskante einer rechteckigen Stoffbahn aus einer Folie oder einem textilen Flächenprodukt ist an der Seite des Gelenkelements schwenkbar am Rahmenbügel befestigt. Die entgegengesetzte zweite Längskante der Stoffbahn ist schwenkbar an der entgegengesetzten Seite des Rahmenbügel 15 befestigt. Die Stoffbahn bildet integral eine Trageschlaufe mit einer erste Taschenwand 11, einer zweite Taschenwand 12 und einem Taschenboden 13, und bildet so einen Beutel 18 der Transporttasche. Der Rahmenbügel 15 und die zwei Längskanten der Stoffbahn der Taschenwand 11, 12,13 definieren eine obere Taschenöffnung 181, durch welche das Tascheninnere 18 zugänglich ist.

Zwei optionale, kleinflächige Seitenwände 14 sind an den seitlichen Kanten der Stoffbahn 11, 12, 13 angeordnet. Diese Seitenwände können auch anders geformt oder ganz weggelassen sein.

In einem geschlossenen Zustand der leeren Transporttasche 10 (Figur 5a, durchgezogene Linie) hängen Taschenwand 11, 12, 13 und Rahmenbügel aufgrund des Eigengewichts nach unten.

Um die leere Transporttasche 10 zu öffnen, wird der Rahmenbügel 15 angehoben und nach oben geschwenkt (Figur 5a, gestrichelte Line), wodurch über die Taschenöffnung 181 das Tascheninnere 18 zugänglich wird. Eine Wareneinheit 91 kann nun von oben in den Taschenbeutel 18 eingebracht oder aus diesem entnommen werden.

Nach dem Einbringen einer Wareneinheit 91 in den Beutel 18 der Transporttasche 10 wird der Rahmenbügel 15 wieder heruntergeklappt und so die Transporttasche 10 wieder geschlossen. Die Wareneinheit 91 rutscht auf der Taschenwand 11, 12, 13 in ein Minimum potenzieller Energie.

Die Seitenwände 14 verhindern in dieser Position ein seitliches Herausrutschen der Wareneinheit 91 aus dem Taschenbeutel 18 der Transporttasche 10. Ist die Stoffbahn 11, 12, 13 elastisch ausgestaltet, wird die Wareneinheit in seitlicher Richtung durch die aufgrund des Gewichts der Wareneinheit elastisch verformten Taschenwände formschlüssig und/oder kraftschlüssig gehalten.

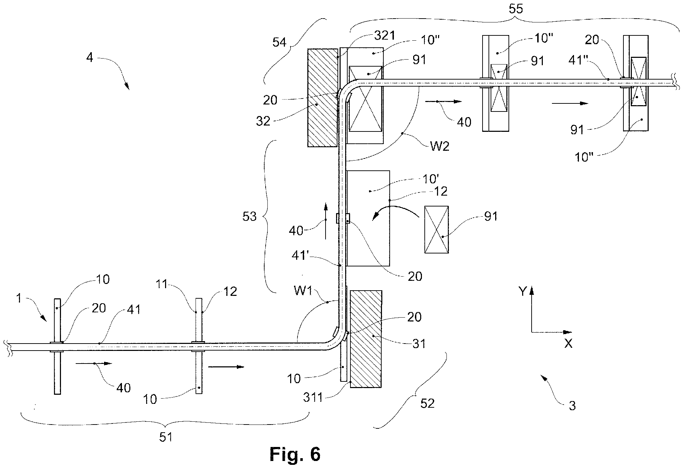

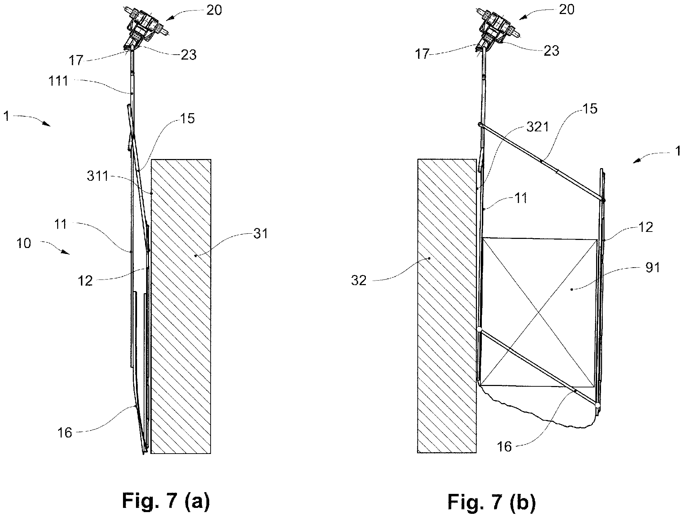

Die Figur 6 zeigt schematisch ein mögliches Beispiel einer Transfervorrichtung 3 in einem schienengeführten Hängefördersystem 4. Die Figur 7 zeigt eine schematische Seitenansicht der Fördereinheiten in den beiden Übergangsbereichen 52, 54 der dargestellten Transfervorrichtung 3, mit Blickrichtung in Förderrichtung im Transferbereich.

Eine Laufschiene 41, 41', 41" des Hängefördersystems 4 definiert einen Förderpfad, der entlang der x-Achse von links kommend um 90° abschwenkt, entlang der y-Achse weiterläuft, um 90° nach rechts abschwenkt und anschliessend entlang der x-Achse nach rechts weiterläuft. Die Laufschiene 41 und der Laufwagen 20 der Fördereinheiten 1 entsprechen im Wesentlichen dem Beispiel in Figur 3. Die Transporttasche 10 und der Traghaken 23 entsprechen im Wesentlichen dem Beispiel in Figur 2.

Die leeren Fördereinheiten 1 treffen mit Förderrichtung 40 nach rechts in einem Eingangsbereich 51 der Transfervorrichtung 3 ein. Die leeren Transporttaschen 10 sind dabei in einer platzsparenden Transportorientierung quer zur Laufschiene 41 und Förderrichtung 40 ausgerichtet. Der Eingangsbereich 51 dient der Bereitstellung der Fördereinheiten 1 für den nachfolgenden Transfervorgang.

Ein Vorteil von Hängefördersystemen ist die Möglichkeit, die Förderung und Zwischenspeicherung der Fördereinheiten erhöht durchzuführen, so dass im Raum keine Grundfläche verbraucht wird. Dem Eingangsbereich voraus geht deshalb vorteilhaft ein Senkbereich (nicht dargestellt) voraus, in welchem auf einer höheren Ebene zugeführte Fördereinheiten auf einem abfallenden Abschnitt oder senkrechten Abschnitt der Laufschiene in den Eingangsbereich 51 gefördert werden. Diese Förderung kann beispielsweise gravitationsgetrieben freilaufend erfolgen.

Die Förderung der Fördereinheiten 1 innerhalb der Transfervorrichtung 4 erfolgt mit regelmässigen Abständen zwischen den einzelnen Fördereinheiten, mit den für Hängefördersysteme bekannten Mitteln, beispielsweise durch Kettenantriebe, Schneckenantriebe oder auch gravitationsgetrieben freilaufend. Die Abstände der aufeinanderfolgenden Fördereinheiten im Eingangsbereich 51 müssen dabei nicht identisch sein wie die Abstände der Transportelemente im darauffolgenden Transferbereich 53 und Ausgangsbereich 55, wie in Figur 6 lediglich beispielhaft dargestellt. Insbesondere kann im Eingangsbereich beispielsweise ein engerer Abstand gewählt werden, um so die noch leeren Transporttaschen in der platzsparenden Querstellung zur Förderrichtung in einem Pufferspeicher volumeneffizient bereitstellen zu können.

Im Eingangsbereich 51 ist die Laufschiene 41 in der Normallage, also symmetrisch zu Senkrechten angeordnet, so dass der Führungskanal der Laufschiene nach unten zeigt. Hingegen ist in einem ersten Übergangsbereich 52, welche das Kurvenstücks der Laufschiene beinhaltet, welches den Eingangsbereich 51 mit dem Transferbereich 53 verbindet, sowie im anschliessenden Transferbereich 53 die Laufschiene 41' in Förderrichtung gesehen im Uhrzeigersinn um einen bestimmten Winkel um die Längsachse der Laufschiene verdreht angeordnet [vgl. Figur 7(a)]. Der Übergang zwischen dem unverdrehten Bereich 41 und dem verdrehten Bereich ist vorteilhaft stetig ausgestaltet, um ruckartige Bewegungen zu vermeiden. Der Klarheit halber ist zu bemerken, dass im Kurvenstück im ersten Übergangsbereich 52 die Laufschiene 41' also sowohl um ihre Längsachse verdreht ist als auch eine Kurve mit einem Winkel von W1 = 90° beinhaltet. Als Folge der Verdrehung der Laufschiene 41' und damit auch des darauf laufenden Laufwagens 20 wird, wie obenstehend anhand von Figur 2(b) erläutert, eine andere Stelle des Traghakens 23 zu einer zweiten stabilen Lagerungsposition, in welcher der Aufhängehaken 17 der Transporttasche 10 stabil aufliegen kann. In dieser zweiten Lagerungsposition wäre der Aufhängehaken mit Transporttasche gegenüber der ersten Lagerungsposition um 90° um die Senkrechte gedreht, so dass die Transporttasche parallel zur Förderrichtung bzw. Längsachse der Laufschiene 41' ausgerichtet wäre. In dieser Position ist der Zugang zu einer oberen Öffnung der Transporttasche 10 nicht durch die Laufschiene behindert, so dass die Transporttasche einfacher durch die obere Öffnung befüllt bzw. entleert werden kann.

Der Übergang des Aufhängehakens (und damit der Transporttasche) zwischen der ersten stabilen Lagerungsposition und der zweiten stabilen Lagerungsposition kann durch externe Aktuatoren erfolgen, wie in WO 2018/142242 A1 gezeigt. Bei einer noch stärkeren Rotation der Laufschiene wäre hingegen nur noch die zweite Lagerungsposition stabil, so dass Aufhängehaken und Transporttasche gravitationsgetrieben in die neue stabile Position rutschen würden.

Anstatt die Transporttasche 10 durch externe Aktuatoren oder unkontrolliert durch das Eigengewicht in die neue, zweite stabile Lagerungsposition zu überführen, verbleibt in der Transfervorrichtung die Transporttasche der Fördereinheit beim Passieren der Transfervorrichtung, und damit auch beim Übergang zwischen der ersten stabilen Lagerungsposition und der zweiten stabilen Lagerungsposition, im Wesentlichen in ihrer ursprünglichen Ausrichtung im Raum. Stattdessen verläuft die Laufschiene in einer Kurve nach links mit einem Winkel W1 = 90°, so dass ein Laufwagen 20 einer Fördereinheit 1 mit seinem Traghaken 23 sich beim Passieren der Kurve um den gleichen Winkel W1 um die Senkrechte dreht bzw. ausrichtet.

Dies hat unter anderem den Vorteil, dass ein Überschwingen der Transporttasche beim Übergang zwischen der ersten stabilen Lagerungsposition und der zweiten stabilen Lagerungsposition und zurück vermieden wird. Vor allem bei befüllten Transporttaschen reduziert sich so die mechanische Belastung der Fördereinheit, insbesondere des Traghakens und des Aufhängehakens. Zudem muss keine Dämpfung der Schwingung abgewartet oder mit zusätzlichen Mitteln erzwungen werden, was die mögliche Förderrate erhöht und die Komplexität der Anlage reduziert. Ebenfalls muss der Drehimpuls der Transporttasche nicht geändert werden.

Um die Transporttasche 10 beim Übergang vom Eingangsbereich in den Transferbereich in der ursprünglichen Raumlage zu halten, ist im gezeigten Beispiel der Transfervorrichtung im ersten Übergangsbereich 52 ein Anschlagelement 31 angeordnet. Dieses weist eine Frontfläche 311 auf, die im Wesentlichen parallel zur Taschenwand 12 der von links entgegenkommenden Transporttaschen 10 ausgerichtet und diesen zugewandt ist [vgl. Figur 7(a)]. Im einfachsten Fall ist das nur schematisch dargestellte Anschlagelement 31 als stabile Frontwand beispielsweise aus Blech oder glattem Kunststoff ausgestaltet. Um bei höheren Fördergeschwindigkeiten gegebenenfalls den Aufprall der Transporttaschen 10 auf das Anschlagselement 31 zu dämpfen, kann auch ein Dämpfungselement vorgesehen sein, beispielsweise eine Schaumstofflage oder ein gedämpftes Federelement, welches zwischen der Frontwand 311 und einer dahinterliegenden Tragstruktur angeordnet ist.

Das Anschlagelement 31 bietet der Transporttasche 10 beim Passieren des Übergangsbereichs 52 eine räumliche Begrenzung, welche verhindert, dass beim Abbiegen der Laufschiene in den Transferbereich 53 die Transporttasche in der ersten stabilen Lagerungsposition des Traghakens verbleibt. Im gezeigten Beispiel wird so aufgrund der Gegenkraft des Anschlagselements 31 der Aufhängehaken 17 mit der Transporttasche 10 gleitend über die Erhöhung zwischen der ersten und zweiten stabilen Lagerungsposition des Traghakens gehoben, ohne dass sich dazu die Transporttasche selbst um die Senkrechte drehen muss. Die Taschenwand 12 liegt dabei auf der Frontfläche 311 auf. Die notwendige Antriebsenergie wird vom Antrieb des Hängefördersystems geliefert. Der Traghaken 23 rotiert also gegenüber dem Aufhängehaken 17 mit der Transporttasche 10, und nicht umgekehrt.

In einem alternativen Beispiel mit grösserem Rotationswinkel der Laufschiene, in welcher die Transporttasche gewichtsgetrieben automatisch in die neue, einzige stabile Position des Traghakens gleiten würde, dient das Anschlagselement 31 ebenfalls als räumliche Begrenzung, wobei in einem solchen Fall ein der Aufbau eines Drehimpulses der Transporttasche und ein daraus folgendes Überschiessen der Rotationsbewegung der Transporttasche verhindert wird. Dies wird erreicht, indem die Frontfläche 311 eine Drehung der Taschenwand 12 um die Senkrechte blockiert, so dass die Transporttasche 10 beim Passieren des Anschlagselements 31 kontrolliert auf dem Traghaken gewichtsgetrieben nach unten in die neue stabile Position rutscht.

Wenn die Transporttasche 10 den Übergangsbereich 52 verlässt und in Förderrichtung 40 in den Transferbereich 53 übergeht, so steht sie nun parallel zur Laufschiene 41' im Transferbereich 53, in der zweiten stabilen Lagerungsposition des Traghakens.

Im Transferbereich 53 wird eine Wareneinheit 91 zwischen der Fördereinheit und der Transfervorrichtung 3 transferiert. Im gezeigten Beispiel wird die Wareneinheit 91 in die Transporttasche 10' transferiert, die Fördereinheit 10' also befüllt. Die Transporttasche 10' wird dazu geöffnet, und ein Stückgut 91 durch eine obere Öffnung der Transporttasche in den Beutel der Transporttasche eingebracht.

Für einen solchen Befüllvorgang einer parallel zur Förderrichtung angeordneten Transporttasche sind verschiedene technische Lösungen bekannt, wie beispielsweise in der Figur 5 aus US 2008/0208407 A1. Im einfachsten Fall legt eine Bedienperson ein Warenelement 91 manuell im Beutel der Transporttasche ab, oder das Warenelement fällt von einem Förderband in den Beutel der Transporttasche. Die Befüllung der Transporttasche 10' in der Mitte des Transferbereichs 53, wie sie in Figur 6 dargestellt ist, ist denn auch nur schematisch zu verstehen. Insbesondere kann der Transferbereich wesentlich länger sein als dargestellt. Die Transporttasche wird je nach Verfahren für den Befüllvorgang angehalten, oder bewegt sich während der Befüllung entlang der Förderrichtung 40.

Für die nachfolgende logistische Bearbeitung der befüllten Fördereinheiten ist es wünschenswert, dass die Transporttaschen wieder quer zur Förderrichtung ausgerichtet sind, da so der notwendige Minimalabstand der aufeinanderfolgenden Fördereinheiten und damit der Platzbedarf in Förderrichtung am geringsten ist.

Bei dem besprochenen Beispiel einer Fördereinheit kann die Rückkehr in die Querlage dadurch erreicht werden, dass die um die Längsachse verdrehte Laufschiene wieder in die Normallage übergeht, in welcher auf dem Traghaken nur eine stabile Lagerungsposition, nämlich die erste stabile Lagerungsposition zur Verfügung steht. Der Aufhängehaken mit der Transporttasche rutscht so auf dem Traghaken gewichtsgetrieben in die stabile Position. Alternativ kann durch externe Aktuatoren die Transporttasche zurück in die Querlage gedreht werden, bevor die Laufschiene wieder in Normallage ist. In beiden Fällen wird der Transporttasche ein Drehimpuls zugeführt, der zu Schwingbewegungen um die Senkrechte führt.

Auch in diesem Fall wäre es vorteilhaft, auf zusätzliche Aktuatoren verzichten zu können, und/oder eine Schwingbewegung der Transporttasche zu vermeiden. Im Beispiel aus Figur 6 wird dies dadurch erreicht, dass in einem an den Transferbereich 53 anschliessenden zweiten Übergangsbereich 54 die um die Längsachse rotierte Laufschiene 41' wieder in ihre Normallage übergeht, bevor anschliessend die Laufschiene eine Kurve mit einem Winkel W2 = 90° ausführt, um anschliessend in einen Ausgangsbereich 55 überzugehen, wo die Laufschiene 41" entlang der x-Achse nach rechts wegläuft.

Figur 7(b) zeigt mit Blick in Förderrichtung eine Seitenansicht der gefüllten Transporttasche 10" beim Einlaufen in der zweiten Übergangsbereich 54. Die Laufschiene und der darauf angeordnete Laufwagen 20 ist noch wie im Transferbereich 53 um die Längsachse gedreht angeordnet. Die Transporttasche 10" ist noch parallel zur Förderrichtung bzw. Laufschiene ausgerichtet, mit dem Aufhängehaken 17 in der zweiten stabilen Lagerungsposition des Traghakens 23 des Laufwagens 20. Ein zweites Anschlagselement 32 mit einer Frontfläche 321 ist parallel und im Wesentlichen bündig zur Taschenwand 11 der Transporttasche 10" angeordnet. Wird nun die Laufschiene von der verdrehten Ausrichtung in die unverdrehte Normallage überführt, so wird die erste stabile Lagerungsposition zur einzigen stabilen Lagerungsposition. Da das zweite Anschlagselement 32 jedoch parallel und im Wesentlichen bündig an der Taschenwand 11 anliegt, kann die Transporttasche 10" nicht in diese stabile Lagerungsposition rotieren.

Schwenkt nun der Laufwagen 20 auf der Laufschiene im Übergangsbereich 54 um einen Winkel W2 = 90° nach rechts, so wird auch der Traghaken 23 um den Winkel W2 um die Senkrechte gedreht. Ohne dass sich die absolute Ausrichtung der Transporttasche 10" im Raum ändert, kann so der Aufhängehaken 17 gewichtsgetrieben auf dem Traghaken in die erste stabile Lagerungsposition gleiten. Der Traghaken 23 rotiert also gegenüber dem Aufhängehaken 17 mit der Transporttasche 10", und nicht umgekehrt.

Im an den Übergangsbereich 54 anschliessenden Ausgangsbereich 55 sind die Transporttaschen 10" wieder in der platzsparenden Querstellung zu der Förderrichtung 40 der Laufschiene 41" angeordnet. Der Ausgangsbereich dient der Bereitstellung der nun befüllten Fördereinheiten 1 für die logistische Weiterbearbeitung im Hängefördersystem 4, beispielsweise zur Lagerung in einem Lagersystem oder zur Sortierung in einem Kommissionierungssystem.

Vorteilhaft schliesst sich an den Ausgangsbereich 55 ein Steigbereich (nicht dargestellt) an, in welchem die Laufschiene schräg oder senkrecht ansteigt, und die darauf laufenden Fördereinheiten beispielsweise mit einem Kettenförderer auf eine andere Ebene hochgefördert werden.

In dem in Figur 6 gezeigten Beispiel einer Transfervorrichtung 3 treffen leere Transporttaschen im Eingangsbereich 51 ein, werden im Transferbereich 53 mit einer Wareneinheit 91 befüllt, und verlassen im Ausgangsbereich 55 die Transfervorrichtung 3 in befülltem Zustand. In einem möglichen alternativen Beispiel einer solchen Transfervorrichtung werden stattdessen befüllte Transporttaschen im Eingangsbereich zugeführt, aus denen anschliessend im Transferbereich die Wareneinheiten entnommen, die Transporttaschen also entleert werden, bevor die leeren Transporttaschen die Transfervorrichtung zur erneuten Verwendung im Hängefördersystem verlassen.

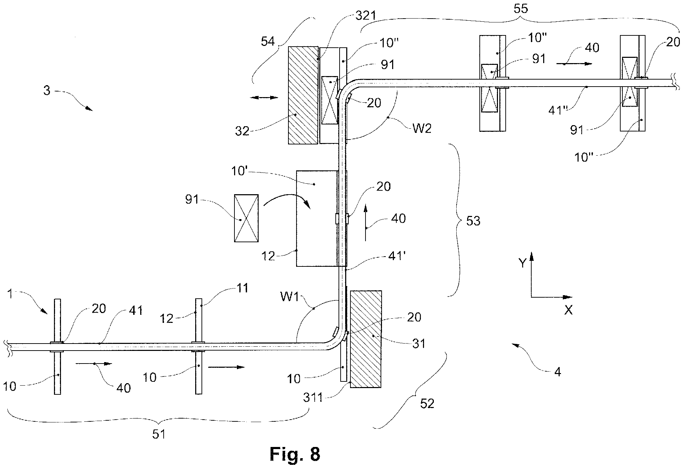

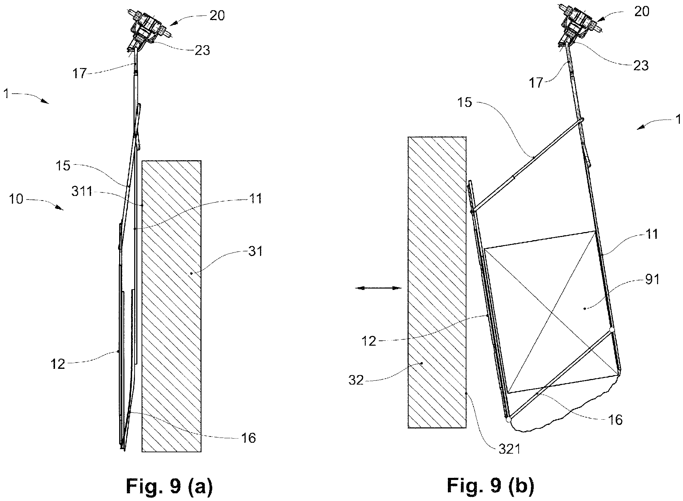

Sind die Transporttaschen zu Beginn gefüllt, so sind die Transporttaschen vorteilhaft, wie nachfolgend in Figur 8 und 9 im Kontext noch eines weiteren Beispiels erläutert, um 180° gedreht auf der Fördereinheit angeordnet, so dass diejenige Taschenwand in Förderrichtung vorausläuft und mit dem ersten Anschlagselement in Wirkverbindung tritt, die nicht beim Öffnen der Transporttasche verschoben wird. Auf diese Weise ist die Position der Taschenwand in Bezug auf das Anschlagelement auch bei unterschiedlich befüllten Transporttaschen klar definiert.

Ein weiteres Beispiel einer Transfervorrichtung 3 wird in den Figuren 8 und 9 gezeigt. Soweit nachfolgend nicht anders beschrieben stimmen dabei die verschiedenen Elemente der Transfervorrichtung 3 und deren Konfiguration mit der Transfervorrichtung aus Figur 6 und 7 im Wesentlichen überein, so dass hier auf eine erneute detaillierte Beschreibung verzichtet und stattdessen auf die vorangegangenen Ausführungen verwiesen wird.

Die ötw Transporttaschen 10 sind auf den Fördereinheiten so angeordnet, dass diejenige Taschenwand 11 in Förderrichtung 40 vorausläuft und im ersten Übergangsbereich 52 mit dem ersten Anschlagselement 31 in Wirkverbindung tritt [vgl. Figur 9(a)], die nicht beim Öffnen der Transporttasche verschoben wird. Die Taschenwand 12 läuft somit in Förderrichtung 40 gesehen nach.

Da somit im Transferbereich 53 die Taschenwand 12 links liegt, wird die Transporttasche 10' wie gezeigt ebenfalls nach links geöffnet, bevor die Wareneinheit 91 in die Transporttasche 10' transferiert wird.

Da je nach Grösse der Wareneinheit 91 nach dem Schliessen der befüllten Transporttasche 10' zwischen der zweiten Taschenwand 12 und der ersten Taschenwand 11 ein variierender Abstand vorliegen kann, muss die daraus resultierende unterschiedliche Position der zweiten Wand 12 in Bezug auf die Laufschiene 41' berücksichtigt werden. Zu diesem Zweck ist im zweiten Übergangsbereich 54 das zweite Anschlagselement 32 entlang der x-Achse verschiebbar angeordnet, wie durch den Doppelpfeil schematisch angedeutet. Das Anschlagselement 32 wird dabei so platziert, dass die Frontfläche 321 in Wirkverbindung mit der zweiten Taschenwand 12 tritt [vgl. Figur 9(b)].

Die passende Positionierung des zweiten Anschlagelements 32 kann auf verschiedene Weise erfolgen. Beispielsweise kann mit optischen Mitteln, wie zum Beispiel Lichtschranken oder Kameras, die Position der Taschenwand 12 bestimmt werden, um daraus die dazugehörige Position des Anschlagselements 32 zu bestimmen und dieses an die entsprechende Position zu verschieben. Ebenfalls möglich ist die Anordnung von Abstandssensoren oder Kontaktsensoren auf dem Anschlagselement 32.

In noch einem anderen Beispiel wird die Transporttasche 10' nach der Befüllung entlang dem Förderpfad weiterhin im voll geöffneten Zustand gehalten bis sie den Übergangsbereich 54 erreicht. Auf diese Weise ist die Position der Taschenwand 12 durch die festgelegte Geometrie der voll geöffneten Transporttasche definiert.

Optional ist es auch möglich, dass das zweite Anschlagselement 32 mit der Fördereinheit 1 in Förderrichtung über eine kurze Distanz mitfährt, wenn diese im Übergangsbereich 54 auf die ausgehende Laufschiene 41" abschwenkt. Die Verfahrgeschwindigkeit des Anschlagselements 32 entlang der x-Achse entspricht dabei vorteilhaft der Geschwindigkeits-Vektorkomponente des Laufwagens entlang der x-Achse, so dass die Transporttasche über die entsprechende Wegstrecke während des Abschwenkens des Laufwagens dauerhaft durch die Frontfläche 321 des Anschlagselements 32 gestützt wird.

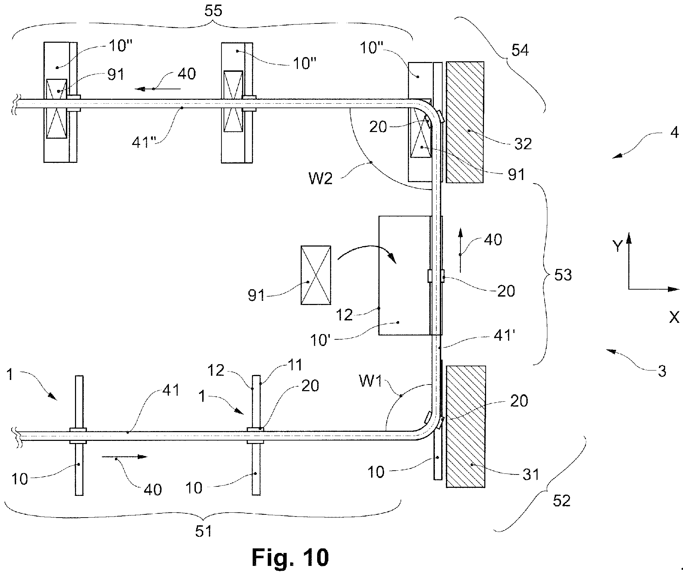

Noch ein weiteres mögliches Beispiel einer Transfervorrichtung ist in Figur 10 dargestellt. Soweit nachfolgend nicht anders beschrieben stimmen dabei die verschiedenen Elemente der Transfervorrichtung 3 und deren Konfiguration mit der Transfervorrichtung aus Figur 8 und 9 im Wesentlichen überein, so dass auch hier auf die vorangegangenen Ausführungen verwiesen wird.

Wie im Beispiel in Figur 8 läuft die Taschenwand 11 in Förderrichtung 40 voraus und tritt im Übergangsbereich 52 mit dem Anschlagselement 31 in Wirkverbindung. Die Figur 9(a) ist entsprechend auch für Figur 10 anwendbar. Im Transferbereich 53 wird die Transporttasche 10' ebenfalls nach links geöffnet.

Im Gegensatz zu Figur 8 verläuft die Laufschiene im Ausgangsbereich 55 nach links.

Der Laufwagen 20 schwenkt also im Übergangsbereich 54 in einer 90°-Kurve nach links ab. Entsprechend ist das zweite Anschlagselement 32 auf der rechten Seite angeordnet, wo es wie schon im ersten Übergangsbereich 52 mit der ersten Taschenwand 11 in Wirkverbindung tritt. Dies hat den Vorteil, dass die Position der Taschenwand 11 unabhängig vom Befüllungsstatus und der Grösse des in der Transporttasche befindlichen Warenelements 91 in beiden Übergangsbereichen 31, 32 klar definiert ist, was eine statische Anordnung der Anschlagselemente erlaubt.

Eine solche Transfervorrichtung kann auch zur Entladung von Fördereinheiten angewendet werden, ohne dass Änderungen an der Konfiguration notwendig sind, mit Ausnahme natürlich der Einrichtungen im Transferbereich.

In den vorangehend diskutierten Beispielen einer Transfervorrichtung können die statischen ersten und zweiten Anschlagselemente 31, 32 so ausgeführt sind, dass sie die Bewegung der Transporttaschen entlang der x-Achse mitvollziehen wenn der Laufwagen im ersten oder zweiten Übergangsbereich 52, 54 abschwenkt. Eine solche Bewegung kann ohne Linearantrieb realisiert werden, indem beispielsweise das Anschlagselement 31, 32 in einer Richtung entlang der x-Achse mit einer Federkraft beaufschlagt ist, welches das Anschlagselement auf ein Stützelement drückt, das eine Grundposition definiert. Eine passend geformte rotierende Kurvenscheibe drückt entgegen der Federkraft in x-Richtung auf das Anschlagselement und bewegt so das Anschlagselement 31, 32 aus der Grundposition in die gewünschte Arbeitsposition. Die Rotationsbewegung der Kurvenscheibe ist vorteilhaft fix an den Antrieb der Laufwagen 20 der Fördereinheiten 1 im Übergangsbereich gekoppelt, so dass die Bewegung des Anschlagselements 31, 32 exakt mit der Bewegung des Laufwagens 20 im Übergangsbereich synchronisiert ist, ohne dass eine komplexe Steuerung notwendig wäre.

Anstatt des in den obenstehend besprochenen Varianten von Transfervorrichtungen verwendeten Traghaken-Aufhängehaken-Systems können auch alternative Systeme verwendet werden, wie sie beispielsweise in den Figuren 6 bis 9 der WO 2018/142242 A1 beschrieben werden. In einem solchen Fall ist keine Verdrehung der Laufschiene notwendig. Das Anschlagselement 31 im ersten Übergangsbereich 52 dient dann dazu, bei einem Abschwenken der Laufwagen auf der Laufschiene um 90° eine Rotation der Transporttaschen zu verhindern, so dass der Traghaken um die Senkrechte dreht, während wiederum der Aufhängehaken mit der Transporttasche die Ausrichtung im Raum im Wesentlichen beibehält. Im zweiten Übergangsbereich 54 kann ein Aktuator zur Drehung der Transporttasche notwendig sein.

In den offenbarten Transfervorrichtungen wurden jeweils zwei Übergangsbereiche verwendet, in welchen der Laufwagen eine Kurve fuhr. Alternativ ist es auch möglich, dass auf den ersten oder zweiten Übergangsbereich verzichtet wird, wobei in diesem Fall die Transporttaschen ersatzweise durch externe Aktuatoren oder aufgrund des Eigengewichts in Bezug auf die Förderrichtung gedreht werden.

In dem Beispiel der Transfervorrichtung 3 wie in Figur 10 erläutert wechselt die Transporttasche 10 nach dem Passieren des zweiten Übergangsbereichs 54 die Laufrichtung. Das heisst, die ursprünglich im Eingangsbereich 51 in Förderrichtung vorauslaufende Taschenwand wird im Ausgangsbereich 55 zur nachfolgenden Taschenwand, und umgekehrt.

Für die bisher diskutierten Transporttaschen führt das zu einer Komplikation in Bezug auf die Weiterbehandlung der Transporttaschen im Hängefördersystem, da diese Transporttaschen in zwei verschiedenen Ausrichtungen quer zur Förderrichtung vorliegen können (erste 11 oder zweite 12 Taschenwand als vorauslaufende Wand). Eine Steuerungsanlage kann dies berücksichtigen, indem sie für alle Transporttaschen im Hängefördersystem die aktuelle Orientierung in Bezug auf die Förderrichtung speichert, und so die einzelnen Transporttaschen korrekt verarbeiten kann.

In einer vorteilhaften Variante weisen dabei alle gefüllten Transporttaschen jeweils die gleiche bestimmte Orientierung auf, und alle leeren Transporttaschen die entgegengesetzte Orientierung

Alternativ können auch Vorrichtungen vorgesehen sein, welche die Fördereinheiten, oder je nach Ausgestaltung des Traghaken-Aufhängehaken-Systems auch nur die Transporttaschen, um 180° um die Senkrechte drehen, beispielsweise vor oder nach dem Transfervorgang. Vorteilhaft werden dabei die leeren Fördereinheiten bzw. Transporttaschen gedreht, da so weniger Masse bewegt werden muss.

Vorteilhaft kann die anhand von Figur 10 beschriebene Transfervorrichtung ohne zusätzlichen Steuerungsaufwand oder Handling-Aufwand betrieben werden.

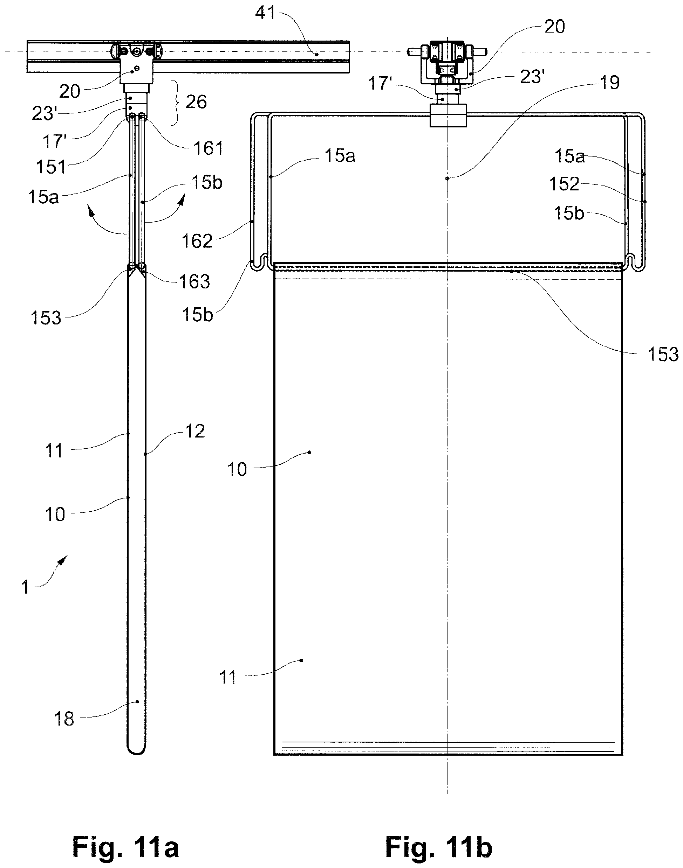

Die Figuren 11a und 11b zeigen eine Fördereinheit 1 mit einer vorteilhaften Ausführungsvariante einer Transporttasche 10, welche von beiden Seiten identisch bedienbar ist, so dass die Orientierung der Transporttasche in Bezug auf eine Förderrichtung irrelevant ist.

Auf einer Laufschiene 41 eines Fördersystems ist ein Laufwagen 20 rollend gelagert. Laufwagen 20 und Laufschiene 41 entsprechen dabei dem Laufwagen und der Laufschiene aus Figur 3, wobei wiederum auch andere Hängefördersysteme verwendbar sind, beispielsweise dasjenige aus Figur 1 und 2.

Am Laufwagen 20 ist an der von der Laufschiene 41 abgewandten Unterseite ein Traghaken 23' angeordnet, in welchem ein Aufhängehaken 17' der Transporttasche 10 hängend drehbar gelagert ist, so dass Traghaken und Aufhängehaken zusammen ein Drehgelenk 26 bilden. Das Drehgelenk kann beispielsweise frei drehbar sein, oder es kann zwei oder mehr stabile Positionen aufweisen, wie beispielsweise aus den Figuren 6 bis 9 in WO 2018/142242 A1 bekannt.

Die Transporttasche 10 kann platzsparend quer zur Förderrichtung bzw. Laufschiene 41 ausgerichtet sein, wie in Figur 11a, 11b gezeigt, oder (nicht dargestellt) parallel zur Förderrichtung beziehungsweise Laufschiene 41, analog zu den bisher diskutierten Transporttaschen.

Am Aufhängehaken 17' sind zwei Gelenkelemente 151, 161 angeordnet, in welchen jeweils ein Rahmenbügel 15a, 15b um eine horizontale Schwenkachse schwenkbar angeordnet sind. Am dem Gelenkelement 151, 161 entgegengesetzten Ende der beiden Rahmenbügel 15a, 15b sind jeweils die beiden Ränder an den Längsenden einer Bahn aus einem flexiblen Material, beispielsweise einem textilen Flächengebilde oder einer Folie, angeordnet und mit jeweils einem der beiden Rahmenbügel verbunden 151, 161. Vorteilhaft ist der Rahmenbügel in einer Lasche 153, 163 an einem Längsende der Bahn der Wand schwenkbar angeordnet. Die Stoffbahn bildet so eine erste Taschenwand 11 und eine zweite Taschenwand 12 und einen diese verbindenden Taschenboden, die zusammen einen Beutel 18 der Transporttasche 10 bilden. In diesem Innenraum 18 der Transporttasche ist während eines Transportvorgangs eine Wareneinheit angeordnet.

In einem leeren Zustand der Transporttasche 10 hängen die Rahmenbügel 15a, 15b und die Taschenwand aufgrund des Eigengewichts gerade herunter, wie in Figur 11a ersichtlich ist.

Jeder der beiden Rahmenbügel 15a, 15b weist mit Blickrichtung senkrecht zur dazugehörigen Taschenwand 11, 12 gesehen jeweils auf der rechten Seite einen seitlich über die Aussenkante der Taschenwand 11, 12 vorstehenden Bereich 152, 162 des Rahmenbügels auf, während auf der jeweils linken Seite der Rahmenbügel nicht seitlich über die Aussenkante der Taschenwand vorsteht. Diese zwei vorstehenden Rahmenbügelabschnitte 152, 162 sind als Eingreifbereich einer Aktuatorvorrichtung vorgesehen, mit welcher die Rahmenbügel 15a, 15b temporär um ihre Drehachse am Gelenkelement 151, 161 geschwenkt werden können. Auf diese Weise wird durch das Hochschwenken eines der Rahmenbügel 15a, 15b eine obenliegende Taschenöffnung oder eine seitliche Taschenöffnung freigegeben, durch welche die Transporttasche beladen oder entladen werden kann.

Aufgrund der vorteilhaften Ausgestaltung der Rahmenbügel 15a, 15b und Ihrer Eingreifbereiche 152, 162 weist die Transporttasche 10 eine 2-zählige Drehsymmetrie auf, nämlich um die senkrechte Rotationsachse des Drehgelenks 26, jedoch keine Spiegelsymmetrie. Als Folge davon kann die Transporttasche für alle relativen Anordnungen der Transporttasche in Bezug auf die Förderrichtung in jeweils zwei Orientierungen angeordnet sein, die sich lediglich durch die Identität der beiden Rahmenbügel 15a, 15b und der Taschenwände 11, 12 unterscheiden. Dies hat den Vorteil, dass eine Aktuatorvorrichtung so ausgestaltet sein kann, dass sie unabhängig davon, welche der zwei möglichen Orientierungen der Transporttasche vorliegt, die beiden Rahmenbügel unterschiedlich behandeln kann. Beispielsweise kann eine Aktuatorvorrichtung selektiv einen Rahmenbügel nach oben schwenken, während der andere Rahmenbügel nicht betätigt oder optional fixiert oder nach hinten geschwenkt wird. Dies kann beispielsweise dadurch erreicht werden, dass ein Greifelement eines Aktuators nur den vorstehenden Eingreifbereich des Rahmenbügels fassen kann.

Die in den Figuren 11a, 11b gezeigte Ausgestaltung der Eingreifbereiche 152, 162 ist nur eine Möglichkeit. Dem Fachmann ergeben sich weitere Varianten, in welchen ebenfalls eine 2-zählige Drehsymmetrie vorliegt, und welche eine gezielte Betätigung der Rahmenbügel erlauben.

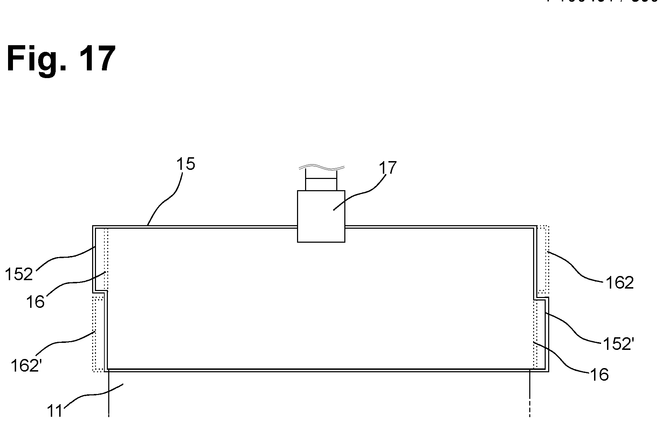

Beispielsweise kann jeweils mit Blick auf die Taschenwand auf der rechten Seite ein oberer Bereich eines Rahmenbügels 15, 16 als vorstehender Eingriffbereich 152, 162 ausgestaltet sein, und auf der linken Seite ein sich vom oberen Eingriffbereich unterscheidender unterer Bereich des gleichen Rahmenbügels als vorstehender Eingriffbereich 152, 162' ausgestaltet sein. Eine solche Ausführungsform ist in Figur 17 schematisch dargestellt, mit Blick auf den ersten Rahmenbügel 15. Der zweite Rahmenbügel 16 (zur besseren Unterscheidung gestrichelt dargestellt) liegt in Blickrichtung dahinter. Diese vorteilhafte Variante erlaubt eine simultane Betätigung jedes Rahmenbügels auf beiden Seiten, was insbesondere bei schwererem Tascheninhalt aufgrund der geringeren Scherkräfte mechanisch vorteilhaft ist.

Die Wand einer solchen vorteilhaften Transporttasche kann auch über gewisse Bereiche starr ausgestaltet sein, wobei die Transporttasche weiterhin im Wesentlichen eine 2-zählige Drehsymmetrie aufweist. Beispielsweise können eine starre erste Wand und eine starre zweite Wand durch einen flexiblen Taschenboden verbunden sein.

Auch wenn die vorangehend diskutierten vorteilhaften Transporttaschen natürlich für die Transfervorrichtung 3 aus Figur 10 besonders vorteilhaft sind, können diese Transporttaschen auch für die anderen Transfervorrichtungen verwendet werden.

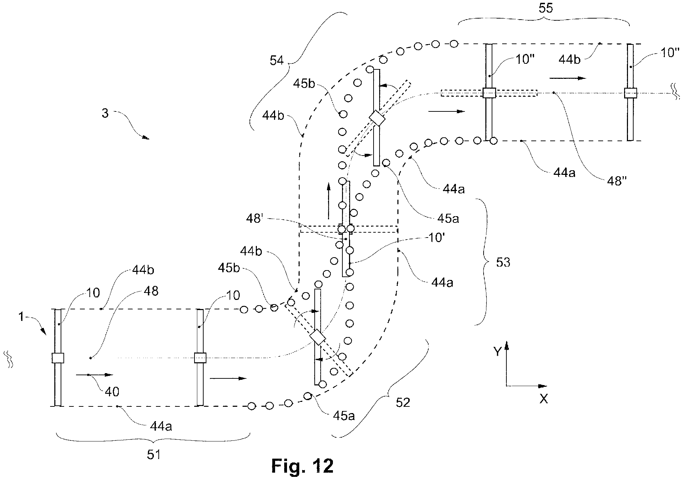

Das Grundprinzip der bisher diskutierten Transfervorrichtungen, gemäss dem die Ausrichtung der Transporttaschen in Bezug auf den Raum im Wesentlichen gleich bleibt, während stattdessen die Ausrichtung des Laufwagens der Fördereinheit aufgrund der Anordnung der Laufschiene ändert, kann auch mit einer schematisch verallgemeinerten Transfervorrichtung gemäss Figur 12 realisiert werden.

Analog zu den Figuren 6 und 8 laufen Transporttaschen 10 auf einem Förderpfad 48 entlang der x-Achse von links in einen Eingangsbereich 51 ein, durchlaufen einen ersten Übergangsbereich 52, in welchem der Förderpfad der Fördereinheiten um 90° nach links abschwenkt, bis der Förderpfad 48' in einem Transferbereich 53 entlang der y-Achse verläuft. Nachdem dort der Transfervorgang stattgefunden hat, schwenkt der Förderpfad 48' in einem nachfolgenden zweiten Übergangsbereich 54 um 90° nach rechts ab, bis schliesslich der Förderpfad 48" in einem Ausgangsbereich 55 wieder entlang der x-Achse verläuft.

In der Figur 12 sind die Transporttaschen 10 der Fördereinheiten 1 lediglich schematisch dargestellt. Insbesondere werden befüllte und leere Transporttasche nicht unterschieden. Der Transferbereich 53 ist in Richtung y-Achse sehr verkürzt dargestellt.

Die gestrichelten Linien 44a, 44b zeigen eine hypothetische äussere Hüllkurve der Transporttaschen 10, wenn diese sich in Förderrichtung 40 entlang des Förderpfads 48, 48', 48" bewegen würden, und dabei ihre relative Ausrichtung zum Förderpfad beibehalten würden. Die Kurven 44a, 44b definieren sich im Wesentlichen dadurch, dass mit dem gleichen Mittelpunkt wie die kreisförmige Kurve des Förderpfads 48 eine Kurve 44a bzw. eine Kurve 44b definiert ist, mit Kurvenradius R + d/2 bzw. R - d/2, wobei R der Kurvenradius der Förderpfadkurve ist und d die Breite der Transporttaschen.

Die gepunkteten Linien 45a, 45b wiederum zeigen eine hypothetische äussere Hüllkurve der Transporttaschen 10, wenn diese sich in Förderrichtung 40 entlang des Förderpfads 48, 48', 48" bewegen würden, und dabei ihre absolute Ausrichtung im Raum parallel zur y-Achse beibehalten würden. Die Kurven 45a, 45b definieren sich im Wesentlichen dadurch, dass mit dem gleichen Radius R wie die Kurve des Förderpfads 48 eine Kurve 45a bzw. eine Kurve 45b definiert ist, wobei dieser Mittelpunkt gegenüber dem Mittelpunkt der Förderpfad-Kurve entlang der y-Achse um d/2 in y-Richtung nach unten bzw. nach oben verschoben ist.

Die Fördereinheiten sind auch in diesem allgemeinen Beispiel so ausgestaltet, dass der Traghaken mehr als eine stabile Lagerungsposition für den Aufhängehaken mit der Transporttasche aufweist, analog zu den bereits diskutierten Beispielen von Traghaken-Aufhängehaken-Systemen.

Wird nun im Übergangsbereich 52 ein Leitelement entlang zumindest eines Teils der rechten Hüllkurve 45a angeordnet, so resultiert eine räumliche Begrenzung für die Transporttasche, nämlich für die in Förderrichtung 40 gesehen rechte Aussenkante der Transporttasche 10. Ein solches Leitelement kann beispielsweise als Abfolge von senkrechten freidrehenden oder angetrieben Rollen realisiert werden, oder auch als Leitblech oder Leitschiene. Beim Passieren des Übergangsbereichs übt das Leitelement eine Gegenkraft entgegen der x-Achse auf die rechte Aussenkante der Transporttasche aus, so dass die Transporttasche zwangsweise in der gleichen Ausrichtung im Raum verbleibt, während gleichzeitig die die Transporttasche in Bezug auf den Laufwagen bzw. den Förderpfad gedreht wird. Schlussendlich steht die Transporttasche 10' parallel zum Förderpfad, in der zweiten stabilen Lagerungsposition des Traghakens.

Das erste Anschlagselement 31 aus den bereits diskutierten Ausführungsvarianten ist im Wesentlichen eine Variante eines solchen Leitelements entlang des oberen Teils der rechten Hüllkurve 45a und mit einem vergleichsweise engen Kurvenradius im Übergangsbereich.

Sobald ein Leitelement entlang der rechten Hüllkurve 45a einen gewissen Rotationswinkel der Transporttasche in Bezug auf den Laufwagen bzw. den Traghaken bewirkt hat, kann optional auch ein Leitelement entlang der gegenüberliegenden linken Hüllkurve 45b eine Gegenkraft auf die linke Aussenkante der Transporttasche ausüben und so eine Drehung der Transporttasche in Bezug auf den Laufwagen bewirken. Da die linke Aussenkante dabei vorausläuft, sollte ein solches Leitelement ein Verkanten vermeiden. Dazu geeignet ist beispielsweise ein glattes Leitblech.

Aufgrund des Angriffswinkels ist in einem ersten Bereich der Kurve im Übergangsbereich 52 ein Leitelement entlang die rechte Hüllkurve 45a effektiver, und in einem darauffolgenden zweiten Bereich der Kurve ist ein Leitelement entlang der linken Hüllkurve 45b effektiver.

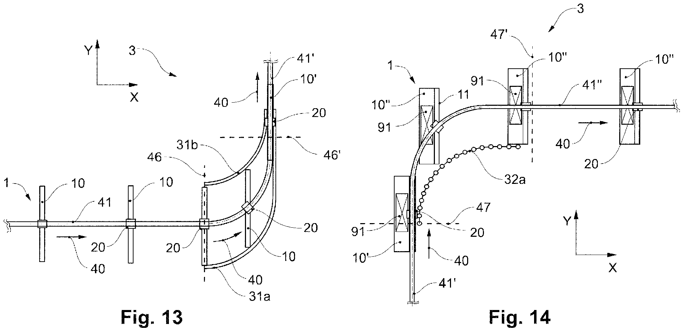

Ein konkretes Beispiel einer Transfervorrichtung mit Leitelementen ist in Figur 13 gezeigt. Die Fördereinheiten 1 mit Laufwagen 20 und leeren Transporttaschen 10 treffen entlang der x-Achse von links kommend im Eingangsbereich ein, bevor sie in den ersten Übergangsbereich übergehen (Beginn 46 des Übergangsbereichs durch gestrichelte Linie markiert). Dort verläuft die Laufschiene 41 entlang einer 90°-Kurve, bevor sie in den Transferbereich übergeht (Beginn 46' durch gestrichelte Linie markiert), und dort entlang der y-Achse gerade weiterläuft 41'.

Ein äusseres Leitelement 31a in Form eines Leitbleches ist entlang einer rechten Hüllkurve analog zur Kurve 45a in Figur 12 angeordnet und übt beim Passieren der Fördereinheit 1 kontinuierlich eine Gegenkraft auf die rechte Aussenkante der Transporttasche 10 aus, so dass diese bei gleichbleibender Ausrichtung im Raum kontinuierlich relativ zur Laufschiene 41 und zum Laufwagen 20 um die Senkrechte rotiert, bis schliesslich der Aufhängehaken die zweite stabile Lagerungsposition des Traghakens erreicht hat und die Transporttasche 10 parallel zur Laufschiene 41' steht.

Ein inneres Leitelement 31b in Form eines Leitbleches ist entlang einer linken Hüllkurve analog zur Kurve 45b in Figur 12 angeordnet und übt beim Passieren der Fördereinheit eine Gegenkraft auf die linke Aussenkante der Transporttasche 10 aus.

Das innere Leitblech 31b ist in der gezeigten Konfiguration redundant, und damit optional. Jedoch hat eine Kombination von innerem Leitblech 31b und äusserem Leitblech 31a den Vorteil, dass die Krafteinwirkung auf die Transporttasche symmetrischer ist in Bezug auf die senkrechte Rotationsachse durch den Traghaken, und besser kontrollierbar ist als nur mit einem Leitblech.

Wenn die Fördereinheit in Figur 12 den Transferbereich 53 verlässt und in den zweiten Übergangsbereich 54 übergeht, wird wie bei den vorausgegangenen Beispielen der Traghaken des Laufwagens der Fördereinheit in eine Konfiguration gebracht, in welcher der Aufhängehaken mit Transporttasche gewichtsgetrieben zurück in die erste stabile Lagerungsposition gleitet. In diesem Fall dienen Leitelemente entlang der Hüllkurven 45a, 45b als räumliche Begrenzung. Die Leitelemente üben eine Gegenkraft auf die Transporttaschen aus, die dafür sorgt, dass die Drehbewegung der Transporttaschen nicht unkontrolliert verläuft und die Transporttasche die absolute Ausrichtung im Raum beibehält. Ein Leitelement entlang der rechten Hüllkurve 45a kann wiederum beispielsweise als Leitblech oder Leitschiene ausgestaltet sein, oder auch als Anordnung von senkrecht drehenden Rollen. Ein Leitelement entlang der linken Hüllkurve 45b wird vorteilhaft als glattes Leitblech ausgestaltet, um ein Verkanten der vorauslaufenden linken Aussenkante der Transporttasche 10" zu vermeiden.

Schliesslich steht am Ausgang des Übergangsbereichs 54 die Transporttasche 10" wieder in der stabilen Lage quer zum Förderpfad 48" und geht in den Ausgangsbereich 55 über.

Das zweite Anschlagselement 32 aus den bereits diskutierten Beispielen ist im Wesentlichen eine Variante eines solchen Leitelements entlang einem unteren Bereich der rechten Hüllkurve 45b und mit einem vergleichsweise engen Kurvenradius im Übergangsbereich.

Ein konkretes Beispiel einer solchen Transfervorrichtung ist in Figur 14 schematisch dargestellt. Aus dem Transferbereich kommend verläuft die Laufschiene 41' entlang der y-Achse und tritt in einen zweiten Übergangsbereich ein (Beginn 47 mit gestrichelter Linie markiert), in welchem die Laufschiene eine 90°-Kurve nach rechts ausführt. Schliesslich tritt die Laufschiene 41" in den Ausgangsbereich ein (Beginn 47' durch gestrichelte Linie markiert), wo sie entlang der x-Achse nach rechts wegläuft.

Beim Beginn 47 des zweiten Übergangsbereichs geht die Laufschiene 41' von der verdrehten Ausrichtung in die Normallage über, so dass der Traghaken eines passierenden Laufwagens 20 wieder so steht, dass nur eine stabile Lagerungsposition des Aufhängehakens und der dazugehörigen Transporttasche möglich ist, nämlich quer zur Laufschiene.

Ein Leitelement 32a in Form einer Reihe von um die Senkrechte frei drehenden Rollen entlang einer Kurve analog zur rechten Hüllkurve 45a in Figur 12 definiert eine räumliche Begrenzung für die Drehbewegung der gefüllten Transporttasche. Die rechte Aussenkante der vorauslaufenden Taschenwand 11 der gefüllten Transporttasche 10" gleitet auf der Rollenbahn 32a, wobei die Drehbewegung der Transporttasche und die Senkrechte immer soweit begrenzt wird, dass die Ausrichtung der Transporttasche 10" im Raum gleich bleibt. Dies verhindert den Aufbau eines Drehimpulses und das Nachschwingen der Transporttasche.

Da diejenige Taschenwand 11 mit dem Leitelement 32a wechselwirkt, die beim Öffnen und Schliessen der Transporttasche nicht bewegt wird, ist für die Funktion des inneren Leitelements 32a der Füllstatus des Förderelements nicht relevant.

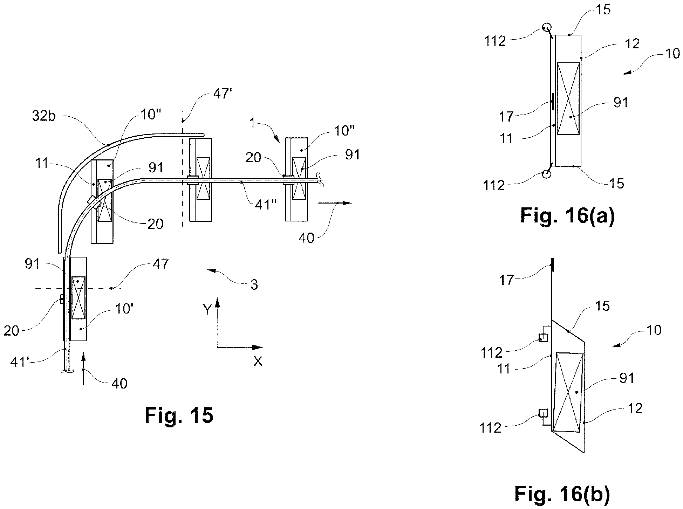

Ein weiteres vorteilhaftes Beispiel einer Transfervorrichtung ist in Figur 15 dargestellt. Analog zum vorangegangenen Beispiel in Figur 14 ein Leitelement die Drehbewegung der Transporttasche 10', wobei dieses Mal das Leitelement 32b als Leitblech entlang einer Kurve analog zur linken Hüllkurve 45b in Figur 12 ausgestaltet ist.

Die Transporttasche ist um 180° gedreht auf dem Laufwagen angeordnet, so dass die Taschenwand 11 in Förderrichtung 40 nachläuft. In dieser Konfiguration läuft demnach die linke Aussenkante der Taschenwand 11 gleitend auf dem äusseren Leitblech 32b.

In Figur 16 ist ein weiteres vorteilhaftes Beispiel einer Transporttasche 10 gezeigt, welche insbesondere für den Einsatz in einer Transfervorrichtung mit Leitblechen 32a, 32b geeignet ist. An den beiden Aussenkanten der Taschenwand 11 der Transporttasche 10 sind vier Rollen 112 angeordnet, welche frei um die Senkrechte rotieren können. Diese Rollen sind in Bezug auf die Taschenwand 11 so angeordnet, dass die Rollen 112 auf den Leitblechen 32a, 32b rollen. Die Aussenkanten der Transporttasche 10 werden dadurch geschont, was die Lebensdauer der Transporttasche erhöht.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Zusätzlich werden in der Beschreibung verschiedene Referenzen zitiert, deren Offenbarungsgehalt hiermit in deren Gesamtheit durch Referenz in die Beschreibung mit aufgenommen wird.

## Patentansprüche

1. Transporttasche (10) für ein Hängefördersystem, insbesondere ein schienengeführtes Fördersystem oder ein Transportkettenfördersystem,
mit einem Förderelement, insbesondere einem Laufwagen (20) eines schienengeführten (41) Fördersystems oder einem Förderkettenglied eines Transportkettenfördersystems, und
mit einer Transporttasche (10) mit einem Aufnahmebereich zur Aufnahme einer oder mehrerer Wareneinheiten (91);
wobei
die Transporttasche über ein Aufhängemittel (17) um eine Drehachse (19) drehbar hängend an einem Tragmittel (23) des Förderelements befestigt ist; die Transporttasche zwei Rahmenbügel (15, 16) aufweist, welche schwenkbar mit dem Aufhängemittel verbunden sind;
ein erster (15, 15a) der beiden Rahmenbügel einen ersten Eingriffsbereich (152) aufweist, welcher geeignet ist, von einem Aktuator zur Schwenkung des ersten Rahmenbügels in Eingriff gebracht zu werden;
ein zweiter (16, 15b) der beiden Rahmenbügel einen zweiten Eingriffsbereich (162) aufweist, welcher geeignet ist, von einem Aktuator zur Schwenkung des zweiten Rahmenbügels in Eingriff gebracht zu werden;
**dadurch gekennzeichnet, dass**
die zwei Rahmenbügel (15, 16) um die Drehachse (19) im Wesentlichen 2-zählig drehsymmetrisch zueinander sind, nicht jedoch spiegelsymmetrisch zueinander, so dass der erste Eingriffsbereich (152) des ersten Rahmenbügels (15, 15a) um die Drehachse (19) 2-zählig drehsymmetrisch zu dem zweiten Eingriffsbereich (162) des zweiten Rahmenbügels (16, 15b) angeordnet ist.

2. Transporttasche nach Anspruch 1, wobei die Transporttasche mindestens eine Wand (11, 12, 13) aufweist, welche den Aufnahmebereich der Transporttasche definiert, und welche an zwei Rändern der Wand mit jeweils einem von dem Aufhängemittel abgewandten Bereich (153, 163) eines der beiden Rahmenbügel (15, 16) schwenkbar verbunden ist.

3. Transporttasche nach Anspruch 2, wobei die mindestens eine Wand (11, 12, 13) als Trageschlaufe in Form einer Bahn aus einem flexiblen Material, beispielsweise einem textilen Flächengebilde oder einer Folie, realisiert ist.

4. Transporttasche nach Anspruch 2, wobei eine starre erste Wand (11) und eine starre zweite Wand (12) durch einen flexiblen Taschenboden (13) verbunden sind.

5. Transporttasche nach Anspruch 1, wobei die Transporttasche mindestens eine Wand (11, 12, 13) aufweist, welche den Aufnahmebereich der Transporttasche definiert, und welche an zwei Rändern der Wand mit jeweils einem von dem Aufhängemittel (17) abgewandten Bereich (153, 163) eines der beiden Rahmenbügel (15, 15a, 16, 15b) schwenkbar verbunden ist; der erste Eingriffsbereich (152) mit Blickrichtung senkrecht zu der mindestens einen Wand auf einer ersten Seite über eine Aussenkante der mindestens einen Wand vorsteht; und der zweite Eingriffsbereich (162) mit Blickrichtung senkrecht zu der mindestens einen Wand auf einer der ersten Seite gegenüberliegenden zweiten Seite über die Aussenkante der mindestens einen Wand vorsteht.

6. Transporttasche nach Anspruch 5, wobei der erste Eingriffsbereich (152) auf der ersten Seite seitlich über die Aussenkante der mindestens einen Wand vorsteht; und der zweite Eingriffsbereich (162) auf der zweiten Seite seitlich über die Aussenkante der mindestens einen Wand vorsteht.

7. Transporttasche nach Anspruch 1, wobei die Transporttasche mindestens eine Wand (11, 12, 13) aufweist, welche den Aufnahmebereich der Transporttasche definiert, und welche an zwei Rändern der Wand mit jeweils einem von dem Aufhängemittel (17) abgewandten Bereich (153, 163) eines der beiden Rahmenbügel (15, 15a, 16, 15b) schwenkbar verbunden ist; der erste Eingriffsbereich (152) mit Blickrichtung senkrecht zu der mindestens einen Wand auf einer ersten Seite in einem ersten Bereich über eine Aussenkante der mindestens einen Wand vorsteht; der erste Eingriffsbereich (152') auf einer der ersten Seite gegenüberliegenden zweiten Seite in einem zweiten Bereich über die Aussenkante der mindestens einen Wand vorsteht; der zweite Eingriffsbereich (162') auf der ersten Seite in einem zweiten Bereich über die Aussenkante der mindestens einen Wand vorsteht; und der zweite Eingriffsbereich (162) auf der zweiten Seite in einem ersten Bereich über die Aussenkante der mindestens einen Wand vorsteht.

8. Transporttasche nach einem der Ansprüche 1 bis 7, wobei der erste Eingriffsbereich (152, 152') als ein oder mehrere Abschnitte des ersten Rahmenbügels (15, 15a) ausgestaltet ist; und der zweite Eingriffsbereich (162, 162') als ein oder mehrere Abschnitte des zweiten Rahmenbügels (16, 15b) ausgestaltet ist.

9. Transporttasche nach einem der Ansprüche 1 bis 7, wobei der erste Eingriffsbereich (152, 152') und der zweite Eingriffsbereich (162, 162') als den Rahmenbügeln befestigte vorstehende starre Laschen oder Bolzen ausgestaltet sind.

10. Transporttasche nach einem der Ansprüche 1 bis 9, wobei die Transporttasche (10) mit dem Förderelement (20) über ein Drehgelenk (26) um die senkrechte Drehachse (19) drehbar verbunden ist.

11. Transporttasche nach einem der Ansprüche 1 bis 10, wobei die Transporttasche (10) einen Aufhängehaken (17) aufweist; das Förderelement (20) einen Traghaken (23) aufweist; und der Aufhängehaken im Traghaken hängend gelagert ist;
wobei der Aufhängehaken im Traghaken mindestens zwei stabile Lagerungspositionen einnehmen kann; und
wobei der Aufhängehaken in einer ersten stabilen Lagerungsposition gegenüber dem Aufhängehaken in einer zweiten stabilen Lagerungsposition um einen bestimmten Winkel gedreht ist.

12. Transporttasche nach Anspruch 11, wobei der Traghaken (23) des Förderelements (20) derart ausgestaltet ist, dass
in einer bestimmten räumlichen Orientierung des Traghakens der Aufhängehaken (17) der Transporttasche (10) eine erste stabile Lagerungsposition einnehmen kann, in welcher sich der Aufhängehaken in einer ersten Ebene ausrichtet; und
in der gleichen räumlichen Orientierung des Traghakens der Aufhängehaken eine zweite stabile Lagerungsposition einnehmen kann, in welcher sich der Aufhängehaken in einer zweiten Ebene ausrichtet;
wobei die erste Lagerungsposition und die zweite Lagerungsposition lokalen Minima der potenziellen Energie der hängend gelagerten Transporttasche (10) entsprechen; und
wobei der Aufhängehaken durch Drehen des Aufhängehakens um einen bestimmten Drehwinkel zwischen der ersten stabilen Lagerungsposition und der zweiten stabilen Lagerungsposition hin und her überführbar ist.

## Claims

1. A transport bag (10) for a suspended conveyor system, in particular a rail-guided conveyor system or a transport chain conveyor system,
with a conveyor element, in particular a carriage (20) of a rail-guided (41) conveyor system or a conveyor chain link of a transport chain conveyor system, and
with a transport bag (10) with a receiving region for receiving one or more units of goods (91);
wherein the transport bag is attached, via a suspension means (17), suspended rotatable about a rotation axis (19), to a carrier means (23) of the conveyor element;
the transport bag comprises two frame brackets (15, 16) pivotally connected to said suspension means;
a first (15, 15a) of the two frame brackets has a first engagement region (152) adapted to be engaged by an actuator for pivoting the first frame bracket;
a second (16, 15b) of the two frame brackets has a second engagement region (162) adapted to be engaged by an actuator for pivoting the second frame bracket;
**characterized in that**
the two frame brackets (15, 16) are substantially 2-fold rotationally symmetrical to each other about the rotation axis (19), but not mirror symmetrical to each other, such that the first engagement region (152) of the first frame bracket (15, 15a) is arranged 2-fold rotationally symmetrical about the rotation axis (19) to the second engagement region (162) of the second frame bracket (16, 15b).

2. The transport bag according to claim 1, wherein the transport bag has at least one wall (11, 12, 13), which defines the receiving region of the transport bag, and which is pivotally connected at two edges of the wall to a respective region (153, 163) of one of the two frame brackets (15, 16) that faces away from the suspension means.

3. The transport bag according to claim 2, wherein the at least one wall (11, 12, 13) is realized as a carrying loop in the form of a web of a flexible material, for example a textile fabric or a foil.

4. The transport bag according to claim 2, wherein a rigid first wall (11) and a rigid second wall (12) are connected by a flexible bag bottom (13)

5. The transport bag according to claim 1, wherein the transport bag has at least one wall (11, 12, 13), which defines the receiving region of the transport bag, and which is pivotally connected at two edges of the wall to a respective region (153, 163) of one of the two frame brackets (15, 15a, 16, 15b), facing away from the suspension means (17); the first engagement region (152) projects, with a viewing angle perpendicular to the at least one wall, on a first side beyond an outer edge of the at least one wall; and the second engagement region (162) projects, with a viewing angle perpendicular to the at least one wall, on a second side opposite to the first side beyond the outer edge of the at least one wall.

6. The transport bag of claim 5, wherein the first engagement region (152) projects on the first side laterally beyond the outer edge of the at least one wall; and the second engagement region (162) projects on the second side laterally beyond the outer edge of the at least one wall.

7. The transport bag according to claim 1, wherein the transport bag has at least one wall (11, 12, 13), which defines the receiving region of the transport bag and which is pivotally connected at two edges of the wall to a respective region (153, 163) of one of the two frame brackets (15, 15a, 16, 15b), facing away from the suspension means (17); the first engagement region (152) projects, with a viewing angle perpendicular to the at least one wall, on a first side in a first region beyond an outer edge of the at least one wall; the first engagement portion (152') projects on a second side opposite the first side in a second region beyond the outer edge of the at least one wall; the second engagement portion (162') projects on the first side in a second region beyond the outer edge of the at least one wall; and the second engagement portion (162) projects on the second side in a first region beyond the outer edge of the at least one wall.

8. The transport bag of any one of claims 1 to 7, wherein the first engagement region (152, 152') is configured as one or more sections of the first frame bracket (15, 15a); and the second engagement region (162, 162') is configured as one or more sections of the second frame bracket (16, 15b).

9. The transport bag of any one of claims 1 to 7, wherein the first engagement region (152, 151') and the second engagement region (162, 162') are configured as protruding rigid lugs or bolts attached to the frame brackets.

10. The transport bag according to any one of claims 1 to 9, wherein the transport bag (10) is rotatably connected to the conveyor element (20) via a pivot joint (26) about the vertical rotation axis (19).

11. The transport bag according to any one of claims 1 to 10, wherein the transport bag (10) has a suspension hook (17); the conveyor element (20) has a carrier hook (23); and the suspension hook is suspended in the carrier hook;
wherein the suspension hook can assume at least two stable bearing positions in the carrier hook; and
wherein the suspension hook in a first stable bearing position is rotated through a certain angle relative to the suspension hook in a second stable bearing position.

12. The transport bag according to claim 11, wherein the carrier hook (23) of the conveyor element (20) is configured such that
in a specific spatial orientation of the carrier hook, the suspension hook (17) of the transport bag (10) can assume a first stable bearing position in which the suspension hook is aligned in a first plane; and in the same spatial orientation of the carrier hook, the suspension hook can assume a second stable bearing position in which the suspension hook is aligned in a second plane;
wherein the first bearing position and the second bearing position correspond to local minima of the potential energy of the suspended transport bag (10); and
wherein the suspension hook is transferable back and forth between the first stable bearing position and the second stable bearing position by rotating the suspension hook through a certain rotation angle.

## Revendications

1. Sac de transport (10) pour un système de convoyage suspendu, en particulier un système de convoyage guidé sur rails ou un système de convoyage à chaîne de transport,
avec un élément de convoyage, en particulier un chariot (20) d'un système de convoyage guidé sur rails (41) ou un maillon de chaîne de convoyage d'un système de convoyage à chaîne de transport, et
avec un sac de transport (10) comportant une zone de réception pour la réception d'une ou de plusieurs unités de marchandises (91) ;
dans lequel
le sac de transport est fixé en suspension à un moyen de support (23) de l'élément de convoyage par l'intermédiaire d'un moyen de suspension (17) de manière à pouvoir pivoter autour d'un axe de rotation (19) ;
le sac de transport présente deux branches de cadre (15, 16) qui sont reliées de manière à pouvoir pivoter au moyen de suspension ;
une première branche (15, 15a) des deux branches de cadre présente une première zone de mise en prise (152) qui est adaptée pour être amenée en prise par un actionneur pour faire pivoter la première branche de cadre ;
une seconde branche (16, 15b) des deux branches de cadre présente une seconde zone de mise en prise (162) qui est adaptée pour être amenée en prise par un actionneur pour faire pivoter la seconde branche de cadre ;
**caractérisé en ce que**
les deux branches de cadre (15, 16) sont sensiblement symétriques par rotation d'ordre 2 l'une par rapport à l'autre autour de l'axe de rotation (19), mais non symétriques par réflexion l'une par rapport à l'autre, de sorte que la première zone de mise en prise (152) de la première branche de cadre (15, 15a) est disposée de manière symétrique en rotation sur deux points autour de l'axe de rotation (19) par rapport à la seconde zone de mise en prise (162) de la seconde branche de cadre (16, 15b).

2. Sac de transport selon la revendication 1, dans lequel le sac de transport présente au moins une paroi (11, 12, 13), laquelle définit la zone de réception du sac de transport et laquelle est reliée de manière à pouvoir pivoter, au niveau de deux bords de la paroi, à respectivement une zone (153, 163), opposée au moyen de suspension, de l'une des deux branches de cadre (15, 16).

3. Sac de transport selon la revendication 2, dans lequel l'au moins une paroi (11, 12, 13) est réalisée en tant que sangle sous la forme d'une bande en un matériau flexible, par exemple un tissu textile ou un film.

4. Sac de transport selon la revendication 2, dans lequel une première paroi (11) rigide et une seconde paroi (12) rigide sont reliées par un fond de sac flexible (13).

5. Sac de transport selon la revendication 1, dans lequel le sac de transport présente au moins une paroi (11, 12, 13), laquelle définit la zone de réception du sac de transport et laquelle est reliée de manière à pouvoir pivoter, au niveau de deux bords de la paroi, à respectivement une zone (153, 163), opposée au moyen de suspension (17), de l'une des deux branches de cadre (15, 15a, 16, 15b) ; la première zone de mise en prise (152) fait saillie, dans la direction du regard, perpendiculairement à l'au moins une paroi sur un premier côté depuis un bord extérieur de l'au moins une paroi ; et la seconde zone de mise en prise (162) fait saillie, dans la direction du regard, perpendiculairement à l'au moins une paroi sur un second côté opposé au premier côté depuis le bord extérieur de l'au moins une paroi.

6. Sac de transport selon la revendication 5, dans lequel la première zone de mise en prise (152) fait saillie latéralement sur le premier côté depuis le bord extérieur de l'au moins une paroi ; et la seconde zone de mise en prise (162) fait saillie latéralement sur le second côté depuis le bord extérieur de l'au moins une paroi.

7. Sac de transport selon la revendication 1, dans lequel le sac de transport présente au moins une paroi (11, 12, 13), laquelle définit la zone de réception du sac de transport et laquelle est reliée de manière à pouvoir pivoter, au niveau de deux bords de la paroi, à respectivement une zone (153, 163), opposée au moyen de suspension (17), de l'une des deux branches de cadre (15, 15a, 16, 15b) ; la première zone de mise en prise (152) fait saillie, dans la direction du regard, perpendiculairement à l'au moins une paroi sur un premier côté dans une première zone depuis un bord extérieur de l'au moins une paroi ; la première zone de mise en prise (152') fait saillie sur un second côté opposé au premier côté dans une seconde zone depuis le bord extérieur de l'au moins une paroi ; la seconde zone de mise en prise (162') fait saillie sur le premier côté dans une seconde zone depuis le bord extérieur de l'au moins une paroi ; et la seconde zone de mise en prise (162) fait saillie sur le second côté dans une première zone depuis le bord extérieur de l'au moins une paroi.

8. Sac de transport selon l'une des revendications 1 à 7, dans lequel la première zone de mise en prise (152, 152') est conçue comme une ou plusieurs sections de la première branche de cadre (15, 15a) ; et la seconde zone de mise en prise (162, 162') est conçue comme une ou plusieurs sections de la seconde branche de cadre (16, 15b).

9. Sac de transport selon l'une des revendications 1 à 7, dans lequel la première zone de mise en prise (152, 152') et la seconde zone de mise en prise (162, 162') sont conçues comme des pattes ou des boulons rigides saillants fixés aux branches de cadre.

10. Sac de transport selon l'une des revendications 1 à 9, dans lequel le sac de transport (10) est relié à l'élément de convoyage (20) de manière à pouvoir pivoter autour de l'axe de rotation (19) vertical par l'intermédiaire d'une articulation rotative (26).

11. Sac de transport selon l'une des revendications 1 à 10, dans lequel le sac de transport (10) présente un crochet de suspension (17) ; l'élément de convoyage (20) présente un crochet de support (23) ; et le crochet de suspension est monté de manière suspendue dans le crochet de support ;
dans lequel le crochet de suspension peut occuper au moins deux positions de repos stables dans le crochet de support ; et
dans lequel le crochet de suspension dans une première position de repos stable est pivoté d'un angle déterminé par rapport au crochet de suspension dans une seconde position de repos stable.

12. Sac de transport selon la revendication 11, dans lequel le crochet de support (23) de l'élément de convoyage (20) est conçu de telle sorte que
dans une orientation spatiale déterminée du crochet de support, le crochet de suspension (17) du sac de transport (10) peut occuper une première position de repos stable dans laquelle le crochet de suspension s'aligne dans un premier plan ; et
dans la même orientation spatiale du crochet de support, le crochet de suspension peut occuper une seconde position de repos stable dans laquelle le crochet de suspension s'aligne dans un second plan ;
dans lequel la première position de repos et la seconde position de repos correspondent à des minima locaux de l'énergie potentielle du sac de transport (10) monté de manière suspendue ; et
dans lequel le crochet de suspension peut être transféré en avant et en arrière entre la première position de repos stable et la seconde position de repos stable en faisant pivoter le crochet de suspension d'un angle de rotation déterminé.
